(19) Europäisches Patentamt
European Patent Office
Office européen des brevets

(11) **EP 4 242 973 A1**

(12) **EUROPEAN PATENT APPLICATION**
published in accordance with Art. 153(4) EPC

(43) Date of publication:
**13.09.2023 Bulletin 2023/37**

(21) Application number: **21897119.0**

(22) Date of filing: **26.11.2021**

(51) International Patent Classification (IPC):
**G06T 15/06** (2011.01)

(52) Cooperative Patent Classification (CPC):
**G06T 15/06; G06T 1/20; G06T 1/60; G06T 15/20**

(86) International application number:
**PCT/CN2021/133414**

(87) International publication number:
**WO 2022/111619 (02.06.2022 Gazette 2022/22)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.11.2020 CN 202011379098**

(71) Applicant: **Huawei Technologies Co., Ltd.
Shenzhen, Guangdong 518129 (CN)**

(72) Inventors:
• WU, Jiangzheng
  Shenzhen, Guangdong 518129 (CN)
• LI, Chao
  Shenzhen, Guangdong 518129 (CN)
• LIU, Chang
  Shenzhen, Guangdong 518129 (CN)
• LU, Congmin
  Shenzhen, Guangdong 518129 (CN)

(74) Representative: **Pfenning, Meinig & Partner mbB
Patent- und Rechtsanwälte
Theresienhöhe 11a
80339 München (DE)**

(54) **IMAGE PROCESSING METHOD AND RELATED APPARATUS**

(57) This application discloses an image processing method, applied to an electronic device with limited computing power. The method includes: obtaining to-be-rendered data; performing rasterization processing on the to-be-rendered data to obtain a first image; and identifying a target object in the first image by using an identifier, and performing ray tracing processing on the target object to obtain a second image. Because ray tracing processing is performed only on a local object in an image, a computing power requirement for image rendering is reduced, so that the device with the limited computing power can also implement image rendering by using a ray tracing method, to improve image rendering effect.

300

301 Obtain to-be-rendered data

302 Perform rasterization processing on the to-be-rendered data to obtain a first image

303 Perform ray tracing processing on a target object in the first image to obtain a second image

FIG. 3

EP 4 242 973 A1

## Description

This application claims priority to Chinese Patent Application No. 202011379098.8, filed on November 30, 2020 and entitled "IMAGE PROCESSING METHOD AND RELATED APPARATUS", which is incorporated herein by reference in its entirety.

## TECHNICAL FIELD

This application relates to the field of image processing technologies, and in particular, to an image processing method and a related apparatus.

## BACKGROUND

With rapid development of the computer industry, demands on images are increasingly high. Quality of an image obtained by rendering a three-dimensional scene by using a conventional rendering method is average, and it is difficult to present a realistic image. Therefore, a ray tracing technology emerges.

The ray tracing (Ray Tracing, RT) technology implements effect such as reflection, refraction, shadow, or caustic by tracing each ray emitted from a camera, to simulate a real virtual scene, and perform rendering on the real virtual scene to obtain a realistic image. However, since each ray in a scene needs to be traced in a ray tracing process, computing overheads of the ray tracing process are large.

In a related technology, the ray tracing technology is usually applied to a device with high computing power (for example, a personal computer equipped with a discrete graphics card). Therefore, the ray tracing technology is usually not applied to a device with limited computing power (for example, a mobile device). As a result, it is difficult to obtain better rendering effect on the device with the limited computing power.

## SUMMARY

This application provides an image processing method. In this method, to-be-rendered data is rendered for one time through rasterization processing, to obtain a first image, and then an object with an identifier in the first image is rendered for a second time through ray tracing processing, to improve rendering effect. Because ray tracing processing is performed only on a local object in an image, a computing power requirement for image rendering is reduced, so that a device with limited computing power can also implement image rendering by using a ray tracing method, to improve image rendering effect.

A first aspect of this application provides an image processing method. The method may be applied to an electronic device with limited computing power, and the electronic device can perform an image rendering process. The method includes: The electronic device obtains to-be-rendered data, where the to-be-rendered data may include a model in a 3D scene and attribute information of the model, for example, the model may be a sky, a house, or the like, and the attribute information may be a color, a material, and the like of the model; the electronic device performs rasterization processing on the to-be-rendered data by using a forward rendering method or a deferred rendering method, to obtain a first image; and the electronic device performs ray tracing processing on a target object with an identifier in the first image, to obtain a second image, where the identifier identifies an object on which ray tracing processing is to be performed, that is, the target object with the identifier is the object on which ray tracing processing is to be performed. For example, the target object may be, for example, an object that can display obvious lighting effect, for example, an object such as a floor, a mirror, or a window.

In other words, the electronic device performs ray tracing processing only on the target object with the identifier in the first image, and does not perform ray tracing processing on an object without the identifier. There are a plurality of manners of identifying the target object. In one manner, if the target object has a corresponding specific field, it may be considered that the target object has the identifier. In another manner, if the target object has a corresponding specific field, and a value of the specific field is a preset value, it may be considered that the target object has the identifier.

In this solution, the to-be-rendered data is rendered for one time through rasterization processing, to obtain the first image, and then an object with the identifier in the first image is rendered for a second time through ray tracing processing, to improve rendering effect. Because ray tracing processing is performed only on a local object in an image, a computing power requirement for image rendering is reduced, so that a device with limited computing power can also implement image rendering by using a ray tracing method, to improve image rendering effect.

In a possible implementation, the identifier further identifies a ray tracing processing manner, and the ray tracing processing manner may include, for example, reflection, refraction, shadow, caustic, or the like. In this way, in a process in which the electronic device performs ray tracing processing on the target object in the first image, the electronic device may determine, based on the identifier of the target object, the ray tracing processing manner that needs to be performed for the target object, and perform ray tracing processing based on the ray tracing processing manner. For example, when the target object in the first image is a floor, and a value of an identifier of the floor is 0, the electronic device may perform ray tracing on the floor, and the ray tracing processing manner is reflection.

The ray tracing processing manner is identified by the identifier. This avoids that the electronic device selects a ray tracing processing method based on a material of the target object after analyzing the material of the target object. Therefore, efficiency of performing ray tracing processing by the electronic device is improved.

In a possible implementation, the to-be-rendered data includes the target object and a material parameter of the target object; and the electronic device may determine the identifier of the target object based on the material parameter of the target object. For example, when a roughness in a material parameter of a floor is 0, the electronic device may determine and generate an identifier of the floor, and a value of the identifier is 0, that is, a ray tracing manner corresponding to the floor is reflection. The electronic device determines the identifier of the target object based on the material parameter of the target object, so that a process of manually adding the identifier to the target object can be omitted. This reduces manpower and material resources.

In a possible implementation, that the electronic device performs ray tracing processing on a target object in the first image includes: The electronic device obtains a location of the target object in the first image in a three-dimensional scene, that is, the electronic device transforms a coordinate system of the target object in the first image into a coordinate system in the three-dimensional scene through coordinate system transformation, to obtain the location of the target object in the three-dimensional scene; the electronic device performs ray tracing processing based on the location of the target object in the three-dimensional scene, to obtain a ray tracing result; and finally the electronic device updates a color of the target object in the first image based on the ray tracing result, to obtain the second image.

In this solution, the electronic device performs ray tracing processing by obtaining, in the three-dimensional scene, the location of the target object in the first image, so that ray tracing processing is performed on the target object in the first image based on an image obtained after rasterization processing. This effectively improves overall rendering effect of the image, and a computing power requirement is low.

In a possible implementation, that the electronic device performs ray tracing processing on a target object in the first image, to obtain a second image includes: The electronic device performs ray tracing on the target object in the first image based on the identifier of the target object, to obtain a ray tracing result; and the electronic device updates a color of the target object in the first image based on the ray tracing result, to obtain the second image.

In this solution, the electronic device implements ray tracing processing by updating the color of the target object in the first image based on the ray tracing result. In this way, the conventional technology can be modified as less as possible, and implementability of the solution can be improved.

In a possible implementation, that the electronic device performs ray tracing on the target object in the first image based on the identifier of the target object, to obtain a ray tracing result may include: The electronic device determines a target pixel in the first image, where the target pixel has the identifier, and the target object includes one or more target pixels; the electronic device obtains a target location of the target pixel in the three-dimensional scene through coordinate transformation; the electronic device performs ray tracing based on the target location and the identifier, to obtain an intersection point between a ray and the three-dimensional scene; and after determining the intersection point, the electronic device may calculate a color of the intersection point, and then fuse the color of the intersection point with an original color of the target pixel based on a ray tracing manner, to update the color of the target pixel and obtain a new color of the target pixel. In other words, in an actual process of ray tracing processing, the electronic device may perform ray tracing processing on each pixel at a granularity of pixels in the first image, to implement ray tracing processing on the target object.

In this embodiment, the electronic device performs ray tracing processing on each pixel with the identifier, and updates a color of the pixel based on the intersection point obtained through ray tracing. Therefore, ray tracing processing is implemented, and overall rendering effect of an image is improved.

In a possible implementation, that the electronic device updates a color of the target pixel based on a color of the intersection point includes: The electronic device calculates a projection of the intersection point on an image based on a location of the intersection point in the three-dimensional scene; if the intersection point has a corresponding projection pixel on the first image or a third image, the electronic device updates the color of the target pixel based on a color of the projection pixel; and if the intersection point does not have the corresponding projection pixel on the first image or the third image, the electronic device calculates the color of the intersection point, and updates the color of the target pixel based on the color of the intersection point, where the third image is a previous frame of image of the second image.

In brief, in a process in which the electronic device renders an image, the electronic device does not render all objects in the 3D scene in real time. The electronic device usually renders an object that is currently to be displayed on a screen, to obtain a rendered image and display the rendered image on the screen. If the intersection point has been rendered and displayed on an image (that is, the third image) in a process of rendering a previous frame of image, or the intersection point has been rendered and displayed on an image (that is, the first image) in a process of rendering a current frame of image, the color of the intersection point may be determined based on a color of a pixel point corresponding to the intersection point in the previous frame of image or the current frame of image. That is, the color of the intersection point is obtained by reusing the color of the pixel point in the previous frame of image or the current frame of image. This avoids recalculation of the color of the intersection point, and reduces a calculation amount.

In a possible implementation, that the electronic device performs ray tracing based on the target location and the identifier, to obtain an intersection point between a ray and the three-dimensional scene includes: The electronic device obtains an acceleration structure, where the acceleration structure is obtained based on the three-dimensional scene, and the acceleration structure may include but is not limited to a bounding volume hierarchy (Bounding Volume Hierarchy, BVH), a uniform grid (Uniform grid), or a k-dimensional tree (k-dimensional tree, kd-tree); and the electronic device performs ray tracing based on the target location and the identifier by using the acceleration structure, to obtain the intersection point between the ray and the three-dimensional scene. The acceleration structure is used to implement ray tracing processing, so that a speed of finding the intersection point by the electronic device is accelerated, and efficiency of performing ray tracing by the electronic device is improved.

In a possible implementation, that the electronic device performs rasterization processing on the to-be-rendered data to obtain a first image includes: The electronic device performs illumination-free rendering on the to-be-rendered data to obtain a fourth image; the electronic device obtains, based on attribute information of the to-be-rendered data, a geometry buffer corresponding to a pixel in the fourth image, where the geometry buffer is used to store an attribute parameter corresponding to the pixel; and the electronic device performs illumination calculation on the pixel in the fourth image based on the geometry buffer, to obtain the first image.

In a possible implementation, that the electronic device obtains, based on attribute information of the to-be-rendered data, a geometry buffer corresponding to a pixel in the fourth image includes: if a to-be-rendered object in the fourth image is the target object, generating, based on attribute information of the to-be-rendered object and first resolution, a first geometry buffer corresponding to the to-be-rendered object; if the to-be-rendered object in the fourth image is located in a surrounding area of the target object, generating, based on the attribute information of the to-be-rendered object and second resolution, a second geometry buffer corresponding to the to-be-rendered object; and if the to-be-rendered object in the fourth image is located in a background area, generating, based on the attribute information of the to-be-rendered object and third resolution, a third geometry buffer corresponding to the to-be-rendered object, where the to-be-rendered data includes the to-be-rendered object, the first resolution is greater than the second resolution, the second resolution is greater than the third resolution, and the first geometry buffer, the second geometry buffer, and the third geometry buffer are used to store a color attribute parameter.

In a possible implementation, that the electronic device obtains, based on attribute information of the to-be-rendered data, a geometry buffer corresponding to a pixel in the fourth image further includes: The electronic device generates, based on the attribute information of the to-be-rendered object and fourth resolution, a fourth geometry buffer corresponding to the to-be-rendered object, where an attribute parameter stored by the fourth geometry buffer is not the color attribute parameter, and the fourth resolution is less than the first resolution.

In brief, before the electronic device generates the G-buffer corresponding to the pixel point in the fourth image, the electronic device may determine a corresponding to-be-rendered object, that is, an object that needs to be displayed in the fourth image, and then determine, based on specific information about the to-be-rendered object, resolution for generating the G-buffer, and finally, generate a G-buffer corresponding to the to-be-rendered object based on the resolution, to obtain the G-buffer corresponding to the pixel point in the fourth image. The G-buffer corresponding to the to-be-rendered object is generated at different resolution, so that a G-buffer corresponding to a non-target object can be reduced. This effectively reduces a calculation amount of the electronic device, reduces storage space, and reduces a requirement for an input/output (input output, I/O) bandwidth of the electronic device.

In a possible implementation, that the electronic device obtains to-be-rendered data includes: The electronic device obtains three-dimensional scene data and a fifth image sent by a server, where the fifth image is a background image rendered by the server. In this way, the electronic device may render only a non-background area part in the 3D scene, and fuse a rendered image with a background image delivered by the server, to obtain a complete and rendered image. The background image sent by the server is an image that includes only a background area, that is, the background image includes only a distant background. For example, the server may render a background such as a sky, a mountain peak, a sea, or a distant high-rise building, to obtain a corresponding background image.

For example, in a possible scenario, a game application may run in the electronic device, and the server renders a background area in the 3D scene in real time, to obtain a background image, and delivers the background image to the electronic device. In a process of running the game application, the electronic device renders a non-background area in the 3D scene, and obtains a rendered image with reference to the background image delivered by the server, to display the rendered image on a screen.

Optionally, when the game application running on the electronic device is an online game in which a large number of users are simultaneously online, the background image rendered by the server may be further separately delivered to a plurality of different electronic devices. Different electronic devices separately perform personalized rendering based on actual content that needs to be displayed, to display different images on screens.

The background area is rendered by the server, so that a rendering calculation amount of the electronic device can be reduced, and a computing power requirement for the electronic device can be reduced.

A second aspect of this application provides an electronic device, including an obtaining unit and a processing unit. The obtaining unit is configured to obtain to-be-rendered data. The processing unit is configured to perform rasterization processing on the to-be-rendered data to obtain a first image. The processing unit is further configured to perform ray tracing processing on a target object in the first image, to obtain a second image, where the target object has an identifier, and the identifier identifies an object on which ray tracing processing is to be performed.

In a possible implementation, the identifier further identifies a ray tracing processing manner.

In a possible implementation, the ray tracing processing manner includes reflection, refraction, shadow, or caustic.

In a possible implementation, the obtaining unit is further configured to obtain a location of the target object in the first image in a three-dimensional scene. The processing unit is further configured to perform ray tracing processing based on the location of the target object in the three-dimensional scene, to obtain a ray tracing result. The processing unit is further configured to update a color of the target object in the first image based on the ray tracing result, to obtain the second image.

In a possible implementation, the processing unit is further configured to: perform ray tracing on the target object in the first image based on the identifier of the target object, to obtain a ray tracing result; and update a color of the target object in the first image based on the ray tracing result, to obtain the second image.

In a possible implementation, the processing unit is further configured to determine a target pixel in the first image, where the target pixel has the identifier, and the target object includes one or more target pixels. The obtaining unit is further configured to obtain a target location of the target pixel in the three-dimensional scene. The processing unit is further configured to perform ray tracing based on the target location and the identifier, to obtain an intersection point between a ray and the three-dimensional scene. The processing unit is further configured to update a color of the target pixel based on a color of the intersection point.

In a possible implementation, the processing unit is further configured to: calculate a projection of the intersection point on an image based on a location of the intersection point in the three-dimensional scene; if the intersection point has a corresponding projection pixel on the first image or a third image, update the color of the target pixel based on a color of the projection pixel; and if the intersection point does not have the corresponding projection pixel on the first image or the third image, calculate the color of the intersection point, and updates the color of the target pixel based on the color of the intersection point, where the third image is a previous frame of image of the second image.

In a possible implementation, the obtaining unit is further configured to obtain an acceleration structure, where the acceleration structure is obtained based on the three-dimensional scene. The processing unit is further configured to perform ray tracing based on the target location and the identifier by using the acceleration structure, to obtain the intersection point between the ray and the three-dimensional scene.

In a possible implementation, the processing unit is further configured to: perform illumination-free rendering on the to-be-rendered data to obtain a fourth image; obtain, based on attribute information of the to-be-rendered data, a geometry buffer corresponding to a pixel in the fourth image, where the geometry buffer is used to store an attribute parameter corresponding to the pixel; and perform illumination calculation on the pixel in the fourth image based on the geometry buffer, to obtain the first image.

In a possible implementation, the processing unit is further configured to: if a to-be-rendered object in the fourth image is the target object, generate, based on attribute information of the to-be-rendered object and first resolution, a first geometry buffer corresponding to the to-be-rendered object; if the to-be-rendered object in the fourth image is located in a surrounding area of the target object, generate, based on the attribute information of the to-be-rendered object and second resolution, a second geometry buffer corresponding to the to-be-rendered object; and if the to-be-rendered object in the fourth image is located in a background area, generate, based on the attribute information of the to-be-rendered object and third resolution, a third geometry buffer corresponding to the to-be-rendered object. The to-be-rendered data includes the to-be-rendered object, the first resolution is greater than the second resolution, the second resolution is greater than the third resolution, and the first geometry buffer, the second geometry buffer, and the third geometry buffer are used to store a color attribute parameter.

In a possible implementation, the processing unit is further configured to generate, based on the attribute information of the to-be-rendered object and fourth resolution, a fourth geometry buffer corresponding to the to-be-rendered object, where an attribute parameter stored by the fourth geometry buffer is not the color attribute parameter, and the fourth resolution is less than the first resolution.

In a possible implementation, the obtaining unit is further configured to obtain three-dimensional scene data and a fifth image sent by a server, where the fifth image is a rendered background image.

In a possible implementation, the to-be-rendered data includes the target object and a material parameter of the target object; and the processing unit is further configured to determine the identifier of the target object based on the material parameter of the target object.

A third aspect of this application provides an electronic device. The electronic device includes a processor, a non-volatile memory, and a volatile memory. The non-volatile memory or the volatile memory stores computer-readable instructions. The processor reads the computer-readable instructions, so that the electronic device implements the method according to any one of the implementations of the first aspect.

According to a fourth aspect of this application, a computer-readable storage medium is provided. The computer-readable storage medium stores a computer program, and when the computer program is run on a computer, the computer is enabled to perform the method according to any one of the implementations of the first aspect.

According to a fifth aspect of this application, a computer program product is provided. When the computer program product is run on a computer, the computer is enabled to perform the method according to any one of the implementations of the first aspect.

According to a sixth aspect of this application, a chip is provided, including one or more processors. Some or all of the processors are configured to read and execute a computer program stored in a memory, to perform the method according to any possible implementation of any one of the foregoing aspects. Optionally, the chip includes the memory, and the memory and the processor are connected to the memory by using a circuit or a wire. Optionally, the chip further includes a communication interface, and the processor is connected to the communication interface. The communication interface is configured to receive data and/or information that needs to be processed. The processor obtains the data and/or information from the communication interface, processes the data and/or information, and outputs a processing result through the communication interface. The communication interface may be an input/output interface. The method according to this application may be implemented by one chip, or may be cooperatively implemented by a plurality of chips.

**BRIEF DESCRIPTION OF DRAWINGS**

FIG. 1a is a schematic diagram of a principle of ray tracing;

FIG. 1b is a schematic diagram of a principle of rasterization processing;

FIG. 2 is a schematic diagram of a structure of an electronic device according to an embodiment of this application;

FIG. 3 is a schematic flowchart of an image processing method 300 according to an embodiment of this application;

FIG. 4 is a schematic flowchart of performing ray tracing processing on an image according to an embodiment of this application;

FIG. 5 is a schematic diagram of a BVH according to an embodiment of this application;

FIG. 6 is a schematic diagram of a reflection scenario according to an embodiment of this application;

FIG. 7 is a schematic diagram of determining a color of an intersection point according to an embodiment of this application;

FIG. 8 is a schematic flowchart of ray tracing processing according to an embodiment of this application;

FIG. 9 is a schematic flowchart of performing rasterization processing on to-be-rendered data according to an embodiment of this application;

FIG. 10 is a schematic flowchart of generating a G-buffer based on adaptive resolution according to an embodiment of this application;

FIG. 11 is a schematic flowchart of rendering and delivering a background image on a server according to an embodiment of this application;

FIG. 12 is a schematic diagram of a pre-filtered ambient light map according to an embodiment of this application;

FIG. 13 is a schematic flowchart of a device-cloud combination image rendering method according to an embodiment of this application;

FIG. 14 is a schematic diagram of a hybrid rendering pipeline according to an embodiment of this application;

FIG. 15(a) is a first image obtained through rasterization processing according to an embodiment of this application;

FIG. 15(b) is a second image obtained through ray tracing processing according to an embodiment of this application; and

FIG. 16 is a schematic diagram of a structure of an electronic device 1600 according to an embodiment of this application.

**DESCRIPTION OF EMBODIMENTS**

The following describes embodiments of this application with reference to the accompanying drawings. It is clear that the described embodiments are merely some rather than all of embodiments of this application. A person of ordinary skill in the art may learn that, with technology development and emergence of a new scenario, the technical solutions provided in embodiments of this application are also applicable to a similar technical problem.

In the specification, claims, and accompanying drawings of this application, the terms "first", "second", and the like are intended to distinguish between similar objects but do not necessarily indicate a specific order or sequence. It should be understood that the data termed in such a way are interchangeable in proper circumstances so that embodiments of this application described herein can be implemented in other orders than the order illustrated or described herein. In addition, the terms "include", "contain" and any other variants mean to cover the non-exclusive inclusion, for example, a process, method, system, product, or device that includes a list of steps or modules is not necessarily limited to those steps or modules, but may include other steps or modules not expressly listed or inherent to such a process, method, product, or device. Names or numbers of steps in this application do not mean that the steps in the method procedure need to be performed in a time/logical sequence indicated by the names or numbers. An execution sequence of the steps in the procedure that have been named or numbered can be changed based on a technical objective to be achieved, provided that same or similar technical effects can be achieved.

With development of computer technologies, more applications such as a game application or a video application require exquisite images to be displayed on an electronic device. These images are usually obtained and rendered by the electronic device based on a model in a three-dimensional (three-dimensional, 3D) scene.

In a conventional image processing method, the 3D scene is usually rendered through rasterization processing to obtain an image that can display the 3D scene. However, quality of the image rendered by using a rasterization processing method is average, and it is difficult to present a realistic image. For example, it is difficult to realistically restore effect such as light reflection, refraction, and shadow in a rendered image. In view of this, a new rendering technology, that is, a ray tracing technology, emerges. Ray tracing and rasterization processing are both methods for implementing image rendering, and a main purpose of the two methods is to project an object in 3D space to two-dimensional screen space for display through computing shading.

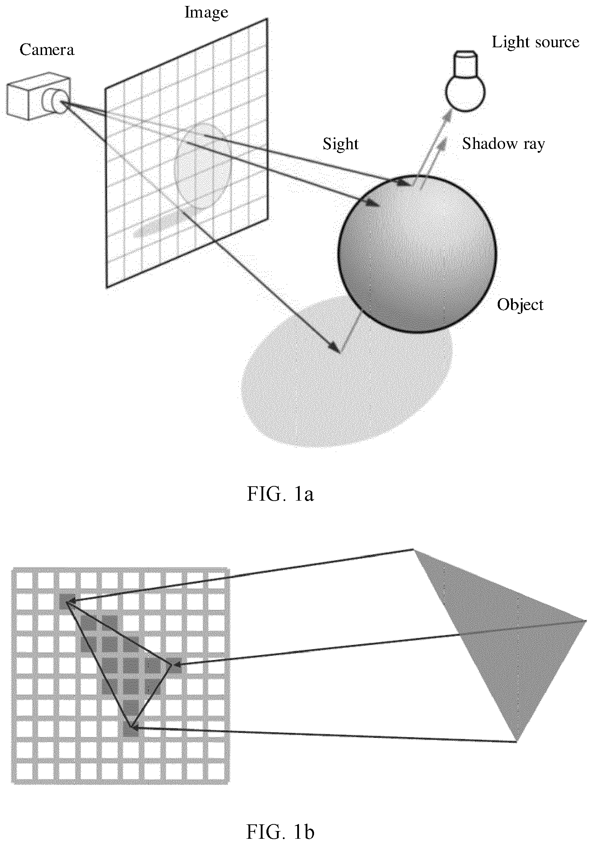

FIG. 1a is a schematic diagram of a principle of ray tracing. As shown in FIG. 1a, the principle of ray tracing is as follows: A ray is emitted from a position of a camera to a 3D scene through a pixel position on an image plane, a nearest intersection point between the ray and a geometric figure is obtained, and then a color of the intersection point is obtained. If a material of the intersection point is reflective, the ray may be continuously traced in a reflection direction of the intersection point, and then a color of the intersection point after reflection is calculated. In other words, in a ray tracing method, a projection and global illumination are calculated by tracing a propagation process of the ray in the three-dimensional scene, and then rendering is performed to obtain a two-dimensional image.

FIG. 1b is a schematic diagram of a principle of rasterization processing. As shown in FIG. 1b, the principle of rasterization processing is as follows: A model in a 3D scene is segmented by using triangles, three-dimensional coordinates of a vertex of a triangle are transformed into two-dimensional coordinates on an image through coordinate transformation calculation, and finally a texture is filled in the triangle on the image, to implement image rendering.

Because rasterization processing is used to directly project, to screen space, content that is visible on the screen space to obtain a corresponding image, processing difficulty is low, and lighting effect obtained through rasterization processing is also poor. In the ray tracing method, each ray emitted from the camera is traced to provide realistic effect such as reflection, refraction, shadow, and ambient light masking. Therefore, the ray tracing method can provide realistic lighting effect. In addition, because a destination of each ray needs to be traced in the ray tracing method, a calculation amount of the ray tracing method is complex, and a device that performs the ray tracing method needs to have high computing power.

In a related technology, a ray tracing technology is mainly applied to a device with high computing power, for example, a personal computer (personal computer, PC) equipped with an independent graphics card. Therefore, a device with limited computing power, for example, a mobile device such as a mobile phone or a tablet computer, usually cannot use the ray tracing technology. As a result, it is difficult to obtain better rendering effect on the device with the limited computing power.

In view of this, an embodiment of this application provides an image processing method. In this method, to-be-rendered data is rendered for one time through rasterization processing, to obtain a first image, and then an object with an identifier in the first image is rendered for a second time through ray tracing processing, to improve rendering effect. Because ray tracing processing is performed only on a local object in an image, a computing power requirement for image rendering is reduced, so that the device with the limited computing power can also implement image rendering by using the ray tracing method, to improve image rendering effect.

The image processing method in this embodiment of this application may be performed by an electronic device. The electronic device includes a CPU and a GPU, and can perform rendering processing on an image. For example, the electronic device may be, for example, a mobile phone (mobile phone), a tablet computer, a notebook computer, a PC, a mobile Internet device (mobile Internet device, MID), a wearable device, a virtual reality (virtual reality, VR) device, an augmented reality (augmented reality, AR) device, a wireless electronic device in industrial control (industrial control), a wireless electronic device in self driving (self driving), a wireless electronic device in remote medical surgery (remote medical surgery), a wireless electronic device in a smart grid (smart grid), a wireless electronic device in transportation safety (transportation safety), a wireless electronic device in a smart city (smart city), a wireless electronic device in a smart home (smart home), and the like. The electronic device may be a device that runs an Android system, an iOS system, a Windows system, or another system. The electronic device may run an application that needs to render a 3D scene to obtain a two-dimensional image, for example, a game application, a lock screen application, a map application, a monitoring application, or the like.

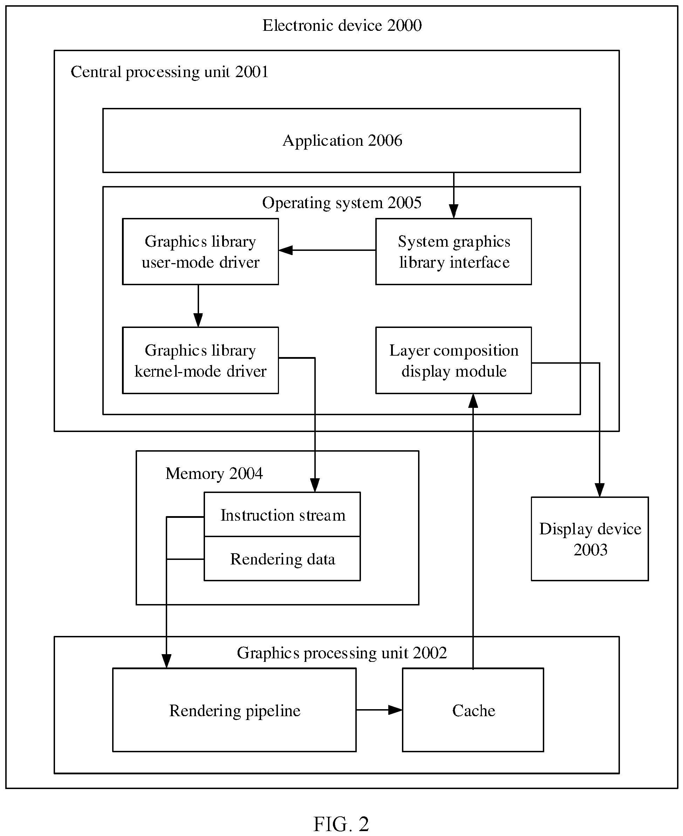

For ease of understanding, the following describes in detail a specific structure of the electronic device with reference to FIG. 2. FIG. 2 is a schematic diagram of a structure of an electronic device according to an embodiment of this application.

In a possible embodiment, as shown in FIG. 2, an electronic device 2000 may include: a central processing unit 2001, a graphics processing unit 2002, a display device 2003, and a memory 2004. Optionally, the electronic device 2000 may further include at least one communication bus (not shown in FIG. 2) that is configured to implement connection and communication between components.

It should be understood that the components in the electronic device 2000 may alternatively be coupled by using another connector, and the another connector may include various interfaces, transmission lines, buses, or the like. Alternatively, the components in the electronic device 2000 may be connected in a radioactive manner by using the central processing unit 2001 as a center. In embodiments of this application, coupling is a mutual electrical connection or communication, including a direct connection or an indirect connection performed by using another device.

The central processing unit 2001 and the graphics processing unit 2002 are also connected in a plurality of manners, and are not limited to the manner shown in FIG. 2. The central processing unit 2001 and the graphics processing unit 2002 in the electronic device 2000 may be located on a same chip, or may be separate chips.

The following briefly describes functions of the central processing unit 2001, the graphics processing unit 2002, the display device 2003, and the memory 2004.

The central processing unit 2001 is configured to run an operating system 2005 and an application 2006. The application 2006 may be a graphics application, for example, a game, a video player, and the like. The operating system 2005 provides a system graphics library interface. The application 2006 generates, by using the system graphics library interface and a driver provided by the operating system 2005, for example, a graphics library user-mode driver and/or a graphics library kernel-mode driver, an instruction stream used to render a graphic or an image frame and required related rendering data. A system graphics library includes but is not limited to a system graphics library such as an open graphics library for embedded systems (open graphics library for embedded systems, OpenGL ES), a khronos native platform graphics interface (the khronos native platform graphics interface), or a Vulkan (a cross-platform drawing application interface). The instruction stream includes a series of instructions, and these instructions are usually instructions for calling the system graphics library interface.

Optionally, the central processing unit 2001 may include at least one of the following types of processors: an application processor, one or more microprocessors, a digital signal processor (digital signal processor, DSP), a microcontroller (microcontroller unit, MCU), an artificial intelligence processor, or the like.

The central processing unit 2001 may further include a necessary hardware accelerator, such as an application-specific integrated circuit (application specific integrated circuit, ASIC), a field programmable gate array (field programmable gate array, FPGA), or an integrated circuit configured to implement a logic operation. The processor 2001 may be coupled to one or more data buses, and is configured to transmit data and instructions between the components of the electronic device 2000.

The graphics processing unit 2002 is configured to: receive a graphics instruction stream sent by the processor 2001, generate a rendering target by using a rendering pipeline (pipeline), and display the rendering target on the display device 2003 by using a layer composition display module of the operating system. The rendering pipeline may also be referred to as a rendering pipeline, a pixel pipeline, or a pixel pipeline, and is a parallel processing unit used to process a graphics signal in the graphics processing unit 2002. The graphics processing unit 2002 may include a plurality of rendering pipelines, and the plurality of rendering pipelines may independently process graphics signals in parallel. For example, the rendering pipeline may perform a series of operations in a process of rendering an image or an image frame, and typical operations may include: vertex processing (Vertex Processing), primitive processing (Primitive Processing), rasterization (Rasterization), fragment processing (Fragment Processing), and the like.

Optionally, the graphics processing unit 2002 may include a general-purpose graphics processing unit that executes software, for example, a GPU, another type of dedicated graphics processing unit, or the like.

The display device 2003 is configured to display various images generated by the electronic device 2000, where the images may be a graphical user interface (graphical user interface, GUI) of the operating system or image data (including a still image and video data) processed by the graphics processing unit 2002.

Optionally, the display device 2003 may include any suitable type of display screen, for example, a liquid crystal display (liquid crystal display, LCD), a plasma display, an organic light-emitting diode (organic light-emitting diode, OLED) display, or the like.

The memory 2004 is a transmission channel between the central processing unit 2001 and the graphics processing unit 2002, and may be a double data rate synchronous dynamic random access memory (double data rate synchronous dynamic random access memory, DDR SDRAM) or another type of cache.

The foregoing describes the specific structure of the electronic device to which the image processing method provided in this embodiment of this application is applied. The following describes in detail a procedure of the image processing method provided in this embodiment of this application.

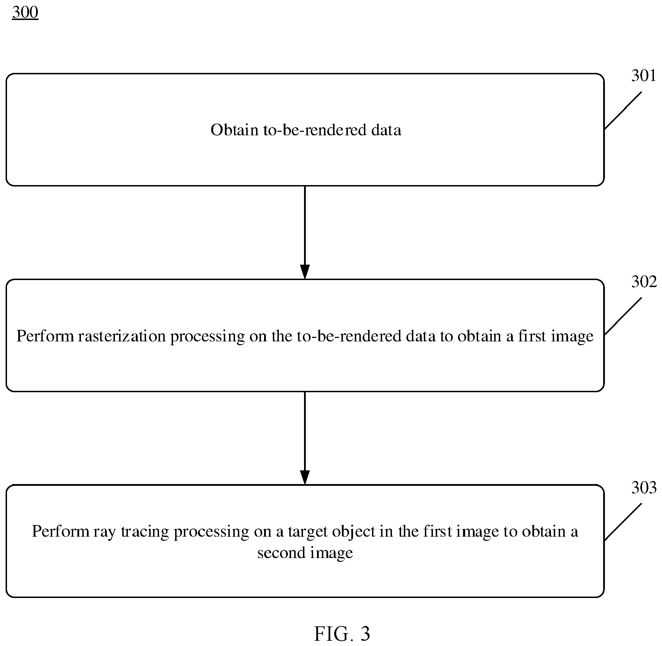

FIG. 3 is a schematic flowchart of an image processing method 300 according to an embodiment of this application. As shown in FIG. 3, the image processing method 300 includes the following steps.

Step 301: Obtain to-be-rendered data.

In this embodiment, the to-be-rendered data may include a model in a 3D scene and attribute information of the model. For example, the model in the 3D scene may include, for example, a model such as a sky, a house, a bridge, a person, a box, or a tree. The attribute information of the model may include attribute information such as a color and a material of the model.

It should be understood that, in a process of downloading and installing an application, the electronic device downloads to-be-rendered data related to the application and stores the to-be-rendered data in the electronic device. In a process of running the application, the electronic device may obtain the to-be-rendered data by loading data related to the application. In addition, in a web page browsing process, the electronic device may also obtain the to-be-rendered data by receiving data sent by a server, so that the electronic device can implement image rendering based on the to-be-rendered data.

In other words, the electronic device may obtain the to-be-rendered data by reading local data, or may obtain the to-be-rendered data by receiving data sent by another device in real time. A manner of obtaining the to-be-rendered data by the electronic device is not specifically limited in this embodiment.

Step 302: Perform rasterization processing on the to-be-rendered data to obtain a first image.

In this embodiment, rasterization processing may be performed on the to-be-rendered data in a plurality of manners.

Manner 1: Rasterization processing is performed on the to-be-rendered data in a forward rendering (forward rendering) manner.

Forward rendering is a process in which a geometry in the to-be-rendered data is projected and split into vertices, then the vertices are converted and split into fragments or pixels, and final rendering processing is performed on the fragments or the pixels before these fragments or the pixels are transferred to a screen. A feature of forward rendering is that an entire process from the beginning of processing the geometry to final display of an image on the screen is uninterrupted. In other words, forward rendering is a linear processing process.

In brief, in the 3D scene, a GPU in the electronic device performs illumination calculation on an object based on all light sources, to render the object and a next object. The rest may be deduced by analogy. However, for each object that needs to be rendered, a CPU needs to perform iterative rendering in a fragment shader on each fragment that needs to be rendered in the object, to obtain a shading result of each fragment. Because shading results of most fragments are overwritten by shading results of subsequent fragments, a large amount of time is wasted on rendering useless fragments during forward rendering.

Manner 2: Rasterization processing is performed on the to-be-rendered data in a deferred rendering manner.

Deferred rendering is a process in which a geometry in the to-be-rendered data is projected and split into vertices, after the vertices are converted and split into fragments or pixels, various types of geometric information of the fragments or the pixels are obtained, and the geometric information is stored in a geometry buffer (geometry buffer, G-buffer). The geometric information may include information such as a position vector (position vector), a color vector (color vector), and/or a normal vector (normal vector). Finally, illumination calculation is performed, based on the geometric information stored in the G-buffer, on the fragments or the pixels to obtain a final rendering result. In an illumination calculation phase, based on a segment or a pixel that needs to be displayed in screen space, the geometric information in the G-buffer is used to perform illumination calculation of a scene on a corresponding segment or a corresponding pixel, to output an image to be displayed in the screen space. Compared with forward rendering, illumination calculation does not need to be repeatedly performed on a large quantity of segments or pixels during deferred rendering, but illumination calculation needs to be performed only on the segment or the pixel that needs to be displayed in the screen space. Therefore, a large quantity of useless illumination calculation steps can be omitted.

Step 303: Perform ray tracing processing on a target object in the first image to obtain a second image.

The target object in the first image has an identifier, and the identifier identifies an object on which ray tracing processing is to be performed. In other words, the target object with the identifier is the object on which ray tracing processing is to be performed. For example, the identifier may be a field. When a value of the field is 0 or 1, it indicates that ray tracing processing needs to be performed on the target object. For another example, the identifier may be a specific value in a field. When the value of the field is 0, it indicates the identifier, that is, ray tracing processing needs to be performed on the target object corresponding to the identifier. When the value of the field is 1, ray tracing processing does not need to be performed on an object corresponding to the field. In brief, there are a plurality of manners of identifying the target object. In one manner, if the target object has a corresponding specific field, it may be considered that the target object has the identifier. In another manner, if the target object has a corresponding specific field, and a value of the specific field is a preset value, it may be considered that the target object has the identifier. This embodiment does not limit an implementation in which the target has an identifier.

Optionally, the identifier may further identify a ray tracing processing manner, and the ray tracing processing manner may include, for example, reflection, refraction, shadow, caustic, or the like. Reflection refers to a phenomenon that light changes a propagation direction on an interface and returns to an original substance when the light propagates to different substances. For example, when an identifier of a floor in the first image identifies reflection, and when the electronic device finds through tracing that a ray exiting from the floor intersects with an automobile chassis, that is, an intersection point of the ray is the automobile chassis, it may be considered that a color of the automobile chassis is reflected on the floor. Reflection may include diffuse reflection or specular reflection. Diffuse reflection refers to a phenomenon that light is reflected in a variable direction on a surface or inside of a diffuse reflector after the light is emitted to the diffuse reflector. Specular reflection refers to a phenomenon that when a beam of light that is incident in parallel is emitted to a smooth reflective surface, the beam of light is reflected in parallel in one direction. Refraction refers to a phenomenon that a propagation direction of light changes when the light is obliquely emitted from one transparent medium to another. Shadow refers to a dark area formed when light straightly enters an opaque object. Caustic refers to a phenomenon that when light passes through a transparent object, because the object has an uneven surface, light is not refracted in parallel, diffuse refraction occurs, and photon dispersion occurs on a projection surface.

For example, the identifier may be a field. When a value of this field is 0, it indicates that the ray tracing processing manner is reflection. When the value of this field is 1, it indicates that the ray tracing processing manner is refraction. When the value of this field is 2, it indicates that the ray tracing processing manner is shadow. When the value of this field is 3, it indicates that the ray tracing processing manner is caustic. In brief, the electronic device may determine whether an object in the first image is the target object by determining whether the object has the identifier. In addition, the electronic device may learn, by determining a value of the identifier of the target object, the ray tracing processing manner that needs to be performed for the target object.

In this way, in a process in which the electronic device performs ray tracing processing on the target object in the first image, the electronic device may determine, based on the identifier of the target object, the ray tracing processing manner that needs to be performed for the target object, and perform ray tracing processing based on the ray tracing processing manner. For example, when the target object in the first image is a floor, and a value of an identifier of the floor is 0, the electronic device may perform ray tracing on the floor, and the ray tracing processing manner is reflection.

Optionally, when the identifier only identifies the object on which the ray tracing processing is to be performed, and does not identify the ray tracing processing manner, in a process of performing ray tracing processing, the electronic device may perform ray tracing processing on the target object based on a material parameter of the target object included in the to-be-rendered data. Generally, the to-be-rendered data includes attribute information of a model, and the attribute information of the model includes a material parameter of the model. The model is usually divided based on a type of an object. Therefore, the material parameter of the target object may be obtained based on attribute information of a model corresponding to the target object.

In a possible example, in the to-be-rendered data obtained by the electronic device, the attribute information of the model may include an identifier corresponding to the model, and the identifier identifies that ray tracing processing is to be performed. In a process in which the electronic device performs rasterization processing on the to-be-rendered data, the electronic device may generate the identifier of the target object in the first image based on the identifier corresponding to the model in the to-be-rendered data, that is, when the electronic device projects the model into screen space to form the target object in the first image, the electronic device records the identifier of the target object based on the identifier of the model. For example, the identifier of the model may be added in a design process of the model. For example, in the design process of the model, an identifier whose value is 0 is added to a model of a floor, an identifier whose value is 1 is added to a model of a diamond, and no identifier is added to a model of a wall. In a design process, a corresponding identifier is added to a specific model based on expected lighting effect. For example, an identifier is added only to a model that can effectively improve lighting effect. In this way, the model on which ray tracing needs to be performed can be selectively determined, to prevent performing ray tracing processing on all models. Therefore, a computing power requirement for a rendering device is reduced.

In another possible example, the to-be-rendered data obtained by the electronic device includes a model of the target object, and attribute information of the model of the target object includes the material parameter of the target object. The electronic device may determine and generate the identifier of the target object based on the material parameter of the target object. In this way, after performing rasterization processing to obtain the first image, the electronic device may obtain the identifier of the target object in the first image.

For example, when a roughness in a material parameter of a floor is 0, the electronic device may determine and generate an identifier of the floor, and a value of the identifier is 0, that is, a ray tracing manner corresponding to the floor is reflection. For another example, when metallicity in a material parameter of silver tableware is 1, the electronic device may determine and generate an identifier of the silver tableware, and a value of the identifier is 0, that is, a ray tracing manner corresponding to the silver tableware is reflection.

It should be understood that, when the electronic device performs rasterization processing in a forward rendering manner, the electronic device may allocate specific storage space to store the identifier of the target object in the first image. Generally, one target object may include one or more pixels, and an identifier corresponding to each pixel of the target object needs to be stored.

When the electronic device performs rasterization processing in a deferred rendering manner, the electronic device may generate, in a process of generating a G-buffer, based on an identifier of the model of the target object, the G-buffer used to store the identifier of the target object. In other words, in addition to a G-buffer used to store a position vector, a color vector, and/or a normal vector of the pixel, each pixel in the first image further has a G-buffer used to store an identifier corresponding to the pixel.

In this embodiment, the to-be-rendered data is rendered for one time through rasterization processing, to obtain the first image, and then an object with the identifier in the first image is rendered for a second time through ray tracing processing, to improve rendering effect. Because ray tracing processing is performed only on a local object in an image, a computing power requirement for image rendering is reduced, so that a device with limited computing power can also implement image rendering by using a ray tracing method, to improve image rendering effect.

The foregoing describes a process in which the electronic device performs hybrid rendering on an image based on rasterization processing and ray tracing processing. For ease of understanding, the following describes in detail a specific process in which the electronic device performs ray tracing processing on the image.

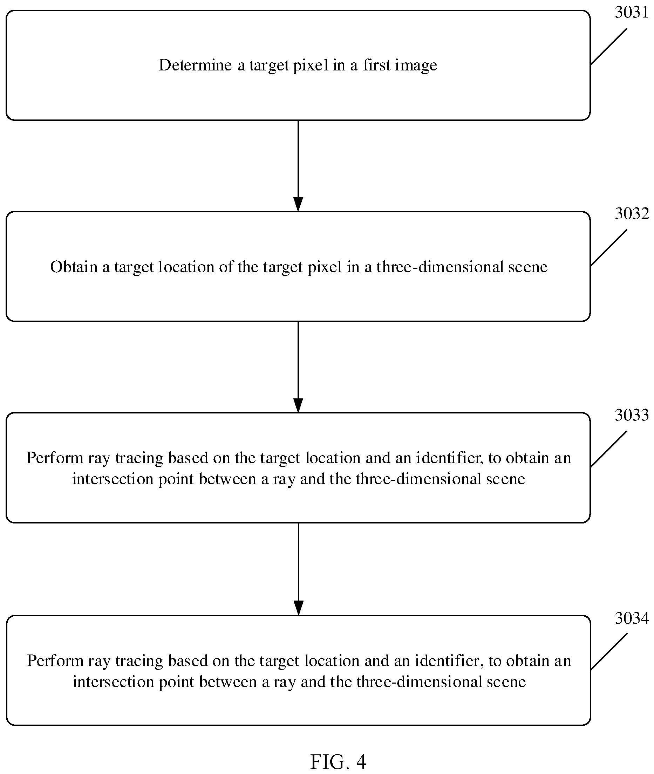

FIG. 4 is a schematic flowchart of performing ray tracing processing on the image according to an embodiment of this application. As shown in FIG. 4, in a possible example, step 303 may further include the following steps.

Step 3031: Determine a target pixel in the first image.

In this embodiment, the target object may include one or more target pixels, and the target pixel has the identifier. For a same target object, one or more target pixels included in the target object have a same identifier. In an actual process of ray tracing processing, ray tracing processing may be performed on each pixel at a granularity of pixels in the first image, to implement ray tracing processing on the target object.

It should be understood that for a model in the to-be-rendered data, the model may include a plurality of components, different components may have different identifiers. Alternatively, some components have identifiers, and other components do not have identifiers. In this case, the target object may be understood as a component of the model. In brief, material parameters of any part on the same target object are the same, and one or more pixels corresponding to the target object have a same identifier. For example, a model of a vehicle includes components such as a window, a vehicle shell, and a tire. The window may have a corresponding identifier, and a value of the identifier is 0. However, components such as the vehicle shell and the tire may not have corresponding identifiers.

Step 3032: Obtain a target location of the target pixel in a three-dimensional scene.

Because the target pixel is actually a pixel point in a two-dimensional image (that is, the first image), and the target pixel is obtained by performing projection transformation on a part of the 3D scene, coordinate transformation may be performed on the target pixel, to obtain the target location of the target pixel in the 3D scene. For example, the electronic device may transform two-dimensional coordinates of the target pixel in the first image, to obtain world coordinates of the target pixel in the 3D scene, and further determine the target location of the target pixel in the 3D scene.

Step 3033: Perform ray tracing based on the target location and the identifier, to obtain an intersection point between a ray and the three-dimensional scene.

After the target location of the target pixel in the 3D scene is determined, a corresponding ray may be determined based on an identifier of the target pixel. For example, when the identifier of the target pixel is 0, it is determined that a to-be-traced ray is a reflected ray. When the identifier of the target pixel is 1, it is determined that a to-be-traced ray is a refracted ray. An intersection point between the to-be-traced ray and another object in the 3D scene after the to-be-traced ray exits from the target location may be obtained by tracing a route of the to-be-traced ray corresponding to the target pixel in the 3D scene. For example, if it is found through tracing that when a reflected ray that exits from a floor intersects with a car chassis in the 3D scene, the car chassis may be determined as an intersection point.

It should be understood that, in a ray tracing processing process, to detect an obtained intersection point between a ray and an object, intersection detection needs to be performed between each ray and all objects in a scene, for example, complex objects such as a sphere and a triangle. In a related technology, each object in a scene is traversed, to find an object whose intersection point with a ray is closest to a starting point of the ray, and the object is determined as an intersection point of the ray. When the 3D scene is complex, and there are a large quantity of objects, the ray tracing processing process is time-consuming. Most objects are far away from a ray, and only a small quantity of objects are likely to intersect with a ray. Therefore, there is no need to traverse all objects in the scene.

Based on this, in a possible example, the electronic device may obtain an acceleration structure, where the acceleration structure is obtained based on the three-dimensional scene, and the acceleration structure is used to quickly obtain an intersection point of a ray. Then, the electronic device performs ray tracing based on the target location and the identifier by using the acceleration structure, to obtain the intersection point between the ray and the three-dimensional scene.

For example, the acceleration structure may include a bounding volume hierarchy (Bounding Volume Hierarchy, BVH), a uniform grid (Uniform grid), a k-dimensional tree (k-dimensional tree, kd-tree), or the like. The acceleration structure is not specifically limited in this embodiment. The acceleration structure can quickly remove irrelevant objects by using a spatial partitioning structure, so that only a small subset of objects need to be traversed, to find a nearest intersection point.

For example, in brief, the foregoing BVH means that an object is surrounded by a simple bounding box, a ray first intersects with the bounding box before intersecting with an object in a scene, if the ray is not in contact with the bounding box, it indicates that the ray needs not to intersect with an object in the bounding box, and if the ray is in contact with the bounding box, whether the ray intersects with the object in the bounding box needs to be further calculated.

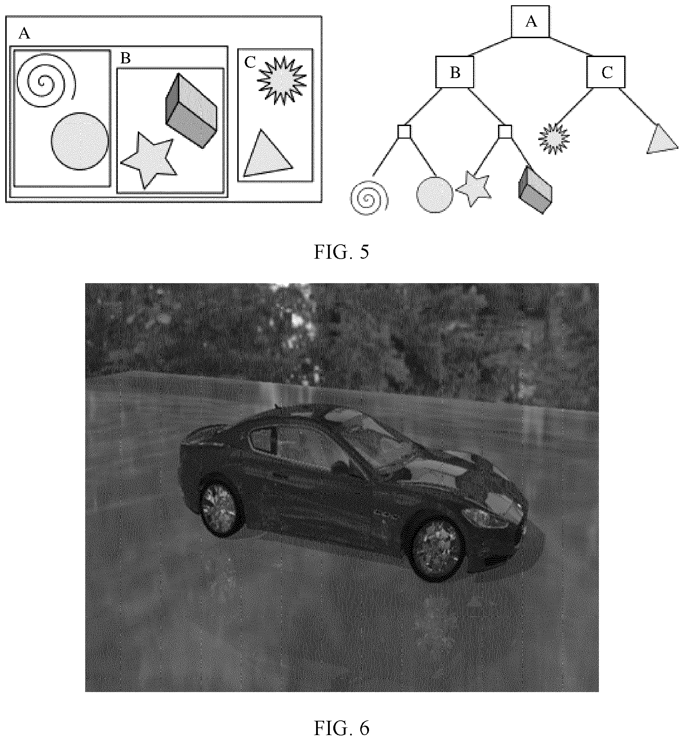

Generally, there are a large quantity of objects in the 3D scene, and using the BVH is equivalent to managing the objects in the 3D scene by using a binary tree structure. FIG. 5 is a schematic diagram of the BVH according to an embodiment of this application. As shown in FIG. 5, different objects are surrounded by bounding boxes of different sizes, and corresponding binary tree structures are formed. When whether each ray intersects with an object in a scene is detected, a binary tree is actually traversed in sequence. For example, when it is detected that a ray does not intersect with a B bounding box in the binary tree, it indicates that the ray definitely does not intersect with four objects in the B bounding box. Therefore, a step of detecting whether the ray intersects with the four objects in the B bounding box may be omitted, and only whether the ray intersects with two objects in a C bounding box needs to be detected.

Step 3034: Update a color of the target pixel based on a color of the intersection point.

After the intersection point between the ray and the three-dimensional scene is obtained through tracing, the electronic device may calculate the color of the intersection point, and then fuse the color of the intersection point with an original color of the target pixel based on a ray tracing manner, to update and obtain a new color of the target pixel.

For example, FIG. 6 is a schematic diagram of a reflection scenario according to an embodiment of this application. When the target object is a floor, the ray tracing manner is reflection, and the intersection point of the ray is a vehicle shell, in a case when a color of the vehicle shell is red, and an original color of the target pixel is light yellow, the color of the target pixel may be updated based on the color of the vehicle shell, that is, red, and the original color of the target pixel, that is, light yellow.

In real-time ray tracing processing, a quantity of sampled rays per pixel is usually limited due to computing power limitation. However, because the quantity of sampled rays is limited, noise is introduced, and rendering effect is affected. A solution is to increase a quantity of sampling points by buffering a historical image frame and projecting and accumulating the historical image frame and a current image frame. In this embodiment of this application, a coloring calculation amount of an intersection point of a ray may be reduced by using a buffered historical image frame and the current image frame.

In a possible embodiment, the electronic device may calculate, based on a location of the intersection point in the three-dimensional scene, a projection of the intersection point on an image. To be specific, the electronic device may calculate, through coordinate transformation, a pixel point that is corresponding to the intersection point in the 3D scene and that is on a two-dimensional image. If the intersection point has a corresponding projection pixel on the first image or a third image, the electronic device updates the color of the target pixel based on a color of the projection pixel. If the intersection point does not have the corresponding projection pixel on the first image or the third image, the electronic device calculates the color of the intersection point, and updates the color of the target pixel based on the color of the intersection point, where the third image is a previous frame of image of the second image. It should be understood that the electronic device may obtain continuous video images by displaying a rendered image on a screen frame by frame, where the second image is used as an image currently to be displayed on the screen, and the third image is a frame of image displayed before the second image.

In brief, in a process in which the electronic device renders an image, the electronic device does not render all objects in the 3D scene in real time. The electronic device usually renders an object currently to be displayed on the screen, to obtain a rendered image and display the rendered image on the screen. If the intersection point has been rendered and displayed on an image (that is, the third image) in a process of rendering a previous frame of image, or the intersection point has been rendered and displayed on an image (that is, the first image) in a process of rendering a current frame of image, the color of the intersection point may be determined based on a color of a pixel point corresponding to the intersection point in the previous frame of image or the current frame of image. In other words, the color of the intersection point is obtained by reusing the color of the pixel in the previous frame of image or the current frame of image. This avoids recalculation of the color of the intersection point, and reduces a calculation amount.

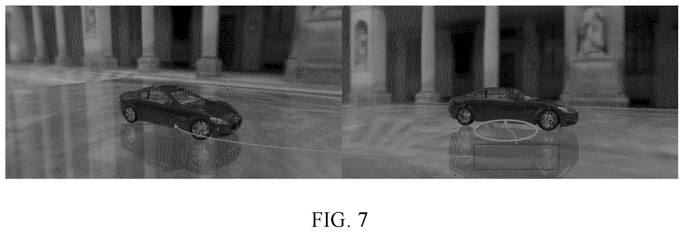

For example, FIG. 7 is a schematic diagram of determining the color of the intersection point according to an embodiment of this application. As shown in FIG. 7, an image on the left is the previous frame of image, and an image on the right is the current frame of image. In both the previous frame of image and the current frame of image, the electronic device renders a body of a vehicle, and a side body of the vehicle is displayed in the image.

For a floor area identified by a rectangular box in the current frame of image on the right, in a process of performing ray tracing processing on the area, an intersection point between a reflected ray exiting from the floor and a scene is the side body of the vehicle, that is, the electronic device needs to determine a color of the side body of the vehicle. In this case, the electronic device may calculate a projection pixel point of the side body of the vehicle on the image. Because a projection pixel point corresponding to the side body of the vehicle can be found on both the previous frame of image and the current frame of image, the electronic device may reuse a color of the projection pixel point of the side body of the vehicle on the previous frame of image or the current frame of image, determine a color of the intersection point between the reflected ray and the scene, and finally implement shading rendering on the floor.

For example, in a floor area identified by a blue ellipse box in the current frame of image on the right, in a process of performing ray tracing processing on the area, an intersection point between a reflected ray exiting from the floor and a scene is a vehicle chassis, that is, the electronic device needs to determine a color of the vehicle chassis. However, because neither the previous frame of image nor the current frame of image has a projection pixel point corresponding to the vehicle chassis, the electronic device needs to recalculate a color of the intersection point (that is, the vehicle chassis) of ray tracing.

For ease of understanding, the following describes the process of performing ray tracing processing by the electronic device in detail with reference to a processing flowchart.

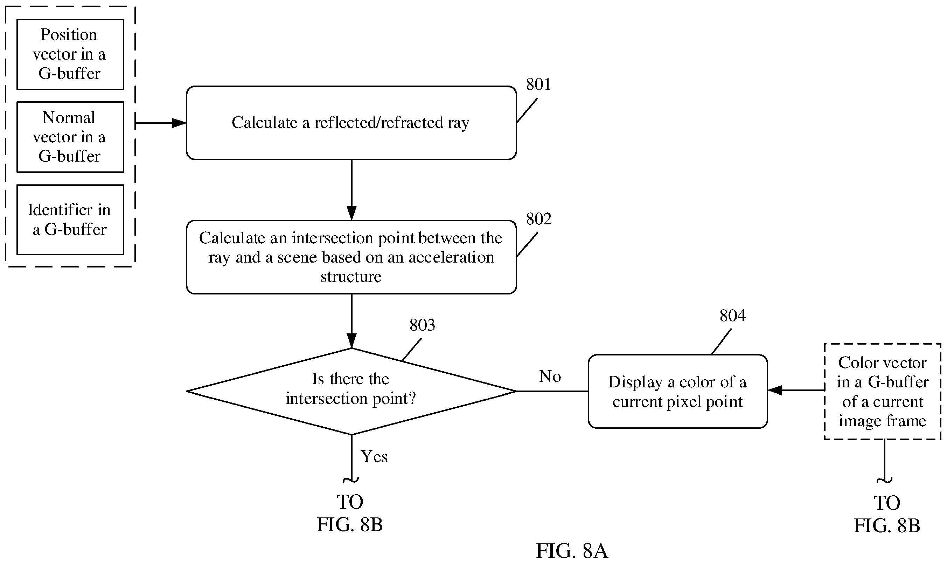

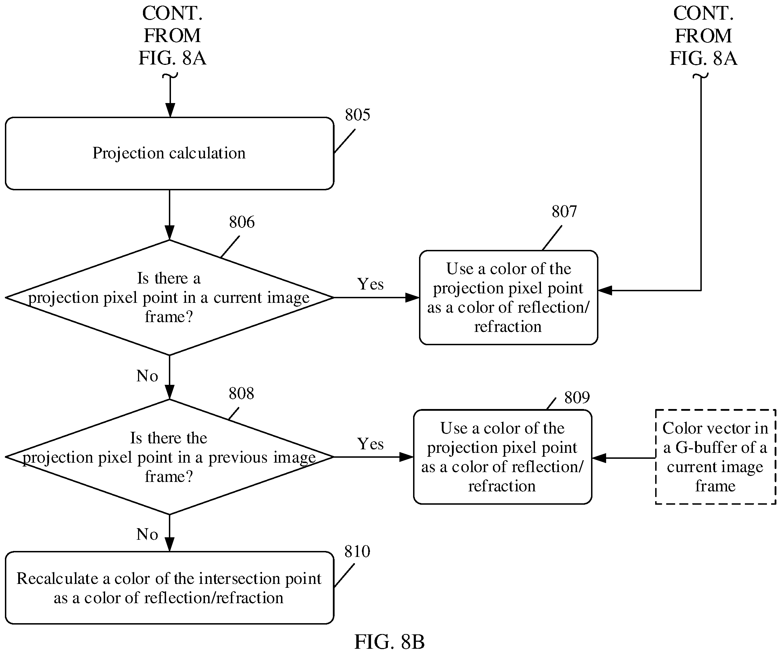

FIG. 8 is a schematic flowchart of ray tracing processing according to an embodiment of this application. As shown in FIG. 8, a process of ray tracing processing includes the following steps.

Step 801: Calculate a reflected/refracted ray.

After the electronic device determines the target pixel, the electronic device may obtain a G-buffer corresponding to the target pixel, to obtain a position vector, a normal vector, and an identifier that are stored in the G-buffer. The position vector is used to determine location information of the target pixel, the normal vector is used to determine a direction of the reflected/refracted ray, and the identifier is used to determine whether a ray is a reflected ray or a refracted ray. Based on information stored in the G-buffer, the electronic device may obtain, through calculation, a reflected/refracted ray that exits from a target location in which the target pixel is located.

Step 802: Calculate an intersection point between the ray and a scene based on an acceleration structure.

The acceleration structure may include but is not limited to the foregoing structures such as the BVH, the uniform grid, or the kd-tree.

Step 803: Determine whether the intersection point between the ray and the scene exists.

Step 804: If the intersection point between the ray and the scene does not exist, display a color of a current pixel point.

If it is obtained through calculation that the intersection point between the ray and the scene does not exist, that is, reflection or refraction does not occur at the target location in which the target pixel is located, there is no need to perform rendering processing on the target pixel point, and a color of the target pixel point may be rendered based on a color vector stored in the G-buffer of the current image frame.

Step 805: If the intersection point between the ray and the scene exists, perform projection calculation on the intersection point.

Specifically, the electronic device may calculate, based on a location of the intersection point in the three-dimensional scene, a projection of the intersection point on an image. To be specific, the electronic device may calculate, through coordinate transformation, a pixel point that is corresponding to the intersection point in the 3D scene and that is on a two-dimensional image.

Step 806: Determine whether a projection pixel point is located in a current image frame.

The electronic device determines whether a projection pixel point corresponding to the intersection point exists in the current image frame.

Step 807: If the projection pixel point is located in the current image frame, use a color of the projection pixel point as a color of reflection/refraction.

If it is determined that the projection pixel point corresponding to the intersection point exists in the current image frame, the color of the projection pixel point is used as the color of reflection/refraction, that is, the color of the projection pixel point is fused with the color of the target pixel, to update the color of the target pixel. The color of the projection pixel point may be obtained based on a G-buffer of the current image frame.

Step 808: If the projection pixel point is not located in the current image frame, determine whether the projection pixel point is located in a previous image frame.

The electronic device determines whether the projection pixel point corresponding to the intersection point exists in the previous image frame.

Step 809: If the projection pixel point is located in the previous image frame, use a color of the projection pixel point as a color of reflection/refraction.

If it is determined that the projection pixel point corresponding to the intersection point exists in the previous image frame, the color of the projection pixel point is used as the color of reflection/refraction, that is, the color of the projection pixel point is fused with the color of the target pixel, to update the color of the target pixel. The color of the projection pixel point may be obtained based on a G-buffer of the previous image frame.

Step 810: If the projection pixel point is not located in the previous image frame, recalculate a color of the intersection point as a color of reflection/refraction.

If it is determined that the projection pixel point corresponding to the intersection point does not exist in the previous image frame, the color of the intersection point is recalculated and then used as the color of reflection/refraction. In other words, a color that is of the intersection point and that is obtained through recalculation is fused with the color of the target pixel, to update the color of the target pixel.

The foregoing describes a process in which the electronic device performs ray tracing processing. To further reduce a calculation amount in a rendering process, the following describes a process in which the electronic device performs rasterization processing on to-be-rendered data provided in this embodiment.

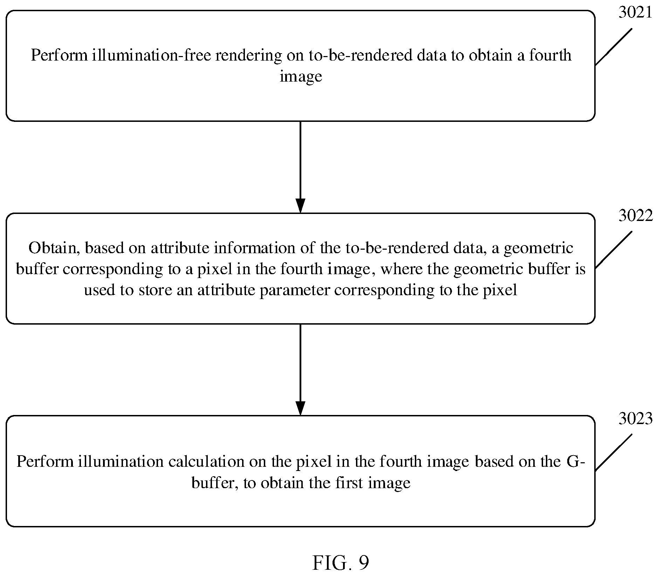

In a possible example, refer to FIG. 9. FIG. 9 is a schematic flowchart of performing rasterization processing on the to-be-rendered data according to an embodiment of this application. As shown in FIG. 9, step 302 may specifically include:

3021: Perform illumination-free rendering on the to-be-rendered data to obtain a fourth image.

In this embodiment, the electronic device performs rasterization processing in a deferred rendering manner. After obtaining the to-be-rendered data, the electronic device may perform preliminary rendering on the to-be-rendered data, that is, rendering without illumination calculation, to obtain the fourth image. For specific steps, refer to the description of the foregoing step 302. Details are not described herein again.

3022: Obtain, based on attribute information of the to-be-rendered data, a geometry buffer corresponding to a pixel in the fourth image, where the geometry buffer is used to store an attribute parameter corresponding to the pixel.

In an illumination-free rendering phase, the electronic device may generate, based on the attribute information of the to-be-rendered data, a G-buffer corresponding to each pixel in the fourth image, where the G-buffer may store an attribute parameter such as a position vector, a normal vector, and a color vector that are corresponding to each pixel point.

In a possible embodiment, the electronic device may generate the G-buffer in a plurality of manners.

First, before the electronic device generates the G-buffer corresponding to the pixel point in the fourth image, the electronic device may determine a corresponding to-be-rendered object, that is, an object that needs to be displayed in the fourth image, then determine, based on specific information about the to-be-rendered object, resolution for generating the G-buffer, and finally, generate a G-buffer corresponding to the to-be-rendered object based on the resolution, to obtain the G-buffer corresponding to the pixel point in the fourth image.

Case 1: If the to-be-rendered object in the fourth image is the target object, a first G-buffer corresponding to the to-be-rendered object is generated based on the attribute information of the to-be-rendered object and first resolution, where the first G-buffer is used to store a color attribute parameter.

If the to-be-rendered object is the target object, a pixel obtained by rendering based on the target object is located in a region of interest in the fourth image. Therefore, for the to-be-rendered object, the electronic device may generate, based on the first resolution, the G-buffer corresponding to the to-be-rendered object, where the first resolution may be the same as resolution of the fourth image, that is, the electronic device generates, by using full resolution, the G-buffer corresponding to the to-be-rendered object. In this way, a corresponding G-buffer is generated for each pixel corresponding to the to-be-rendered object in the fourth image. For example, when the resolution of the fourth image is 1000 * 1000, the electronic device generates, based on the resolution of 1000 * 1000, the first G-buffer corresponding to the to-be-rendered object.

Case 2: If the to-be-rendered object in the fourth image is located in a surrounding area of the target object, a second G-buffer corresponding to the to-be-rendered object is generated based on the attribute information of the to-be-rendered object and second resolution, where the second G-buffer is used to store a color attribute parameter.

If the to-be-rendered object is located in the surrounding area of the target object, it may be considered that a pixel obtained by rendering based on the to-be-rendered object is located in a surrounding area of a region of interest. Therefore, for the to-be-rendered object, the electronic device may generate, based on the second resolution, the second G-buffer corresponding to the to-be-rendered object, where the second resolution is less than the first resolution. For example, the second resolution may be 3/4 of the first resolution, that is, when the first resolution is 1000 * 1000, the second resolution may be 750 * 750. In addition, the second resolution may also be another specific value less than the first resolution, and the second resolution is not specifically limited herein.

Specifically, a manner of determining that the to-be-rendered object is located in the surrounding area of the target object may be: determining, by determining a distance between a pixel corresponding to the to-be-rendered object and a pixel corresponding to the target object, whether the to-be-rendered object is located in the surrounding area of the target object. For example, if the distance between the pixel corresponding to the to-be-rendered object and the pixel corresponding to the target object is less than a first preset threshold, it may be determined that the to-be-rendered object is located in the surrounding area of the target object. For example, the first preset threshold may be 10 pixels, that is, when the distance between the pixel corresponding to the to-be-rendered object and the pixel corresponding to the target object is fewer than 10 pixels, it may be determined that the to-be-rendered object is located in the surrounding area of the target object.

Case 3: If the to-be-rendered object in the fourth image is located in a background area, a third G-buffer corresponding to the to-be-rendered object is generated based on the attribute information of the to-be-rendered object and third resolution, where the third G-buffer is used to store a color attribute parameter.

If the to-be-rendered object is located in the background area of the target object, it may be considered that a pixel obtained by rendering based on the to-be-rendered object is located in the background area. Therefore, for the to-be-rendered object, the electronic device may generate, based on the third resolution, the third G-buffer corresponding to the to-be-rendered object, where the third resolution is less than the second resolution. For example, the third resolution may be 1/2 of the first resolution, that is, when the first resolution is 1000 * 1000, the second resolution may be 500 * 500. In addition, the third resolution may also be another specific value less than the first resolution, and the third resolution is not specifically limited herein.

It should be understood that whether the to-be-rendered object is located in the background area is determined by determining a distance between a pixel corresponding to the to-be-rendered object and a pixel corresponding to the target object. For example, if the distance between the pixel corresponding to the to-be-rendered object and the pixel corresponding to the target object is less than a second preset threshold, it may be determined that the to-be-rendered object is located in the surrounding area of the target object. The second preset threshold may be, for example, 50 pixels, that is, when the distance between the pixel corresponding to the to-be-rendered object and the pixel corresponding to the target object is greater than 50 pixels, it may be determined that the to-be-rendered object is located in the background area.

The to-be-rendered data includes the to-be-rendered object, the first resolution is greater than the second resolution, the second resolution is greater than the third resolution, and the first G-buffer, the second G-buffer, and the third G-buffer are all configured to store the color attribute parameter, that is, a color vector. In other words, only when generating a G-buffer that is corresponding to the to-be-rendered object and that is used to store the color attribute parameter, the electronic device selects, based on the specific information about the to-be-rendered object, corresponding resolution from the foregoing three types of resolution to generate the G-buffer corresponding to the to-be-rendered object.

The foregoing three cases describe a manner in which the electronic device generates the G-buffer used to store the color attribute parameter. The following describes a manner in which the electronic device generates a G-buffer used to store another attribute parameter.

Case 4: A fourth G-buffer corresponding to the to-be-rendered object is generated based on the attribute information of the to-be-rendered object and fourth resolution, where an attribute parameter stored by the fourth G-buffer is not the color attribute parameter, and the fourth resolution is less than the first resolution.

In brief, when the electronic device generates a G-buffer that is not used to store the color attribute parameter, the electronic device generates the G-buffer at the fourth resolution. For example, when the electronic device generates a G-buffer used to store a location attribute parameter or a normal vector attribute parameter, regardless of whether the to-be-rendered object is the target object or is located in the surrounding area of the target object, the electronic device generates the G-buffer corresponding to the to-be-rendered object at the fourth resolution.

It should be understood that higher resolution used to generate a G-buffer indicates more G-buffers corresponding to an image of a same area, that is, higher rendering precision. Conversely, lower resolution used to generate a G-buffer indicates fewer G-buffers corresponding to an image of a same area, that is, lower rendering precision. For example, for an image formed by 1000 * 1000 pixels, if a G-buffer is generated at resolution of 1000 * 1000, 1000 * 1000 G-buffers may be obtained; and if a G-buffer is generated at resolution of 500 * 500, 500 * 500 G-buffers may be obtained. In other words, for the target object in the image, a G-buffer may be generated at high resolution, to ensure rendering precision of the target object; and for the surrounding area and the background area of the target object in the image, a G-buffer may be generated at low resolution, to reduce a calculation amount of the electronic device, reduce storage space, and reduce a requirement for an input/output (input output, I/O) bandwidth of the electronic device.

3023: Perform illumination calculation on the pixel in the fourth image based on the G-buffer, to obtain the first image.

After obtaining the G-buffer corresponding to each pixel in the fourth image, the electronic device may perform illumination calculation on the fourth image based on attribute parameters such as the position vector, the normal vector, and the color vector that are stored in the G-buffer, to obtain the rendered first image.

It may be understood that, when the electronic device generates the G-buffer at low resolution, some pixels in the fourth image may not have corresponding G-buffers, that is, the electronic device does not store attribute parameters corresponding to these pixels. In this case, in a process of performing illumination calculation on the fourth image, the electronic device may obtain, in an interpolation manner, an attribute parameter corresponding to a pixel that does not have a G-buffer, to implement illumination calculation on the pixel.

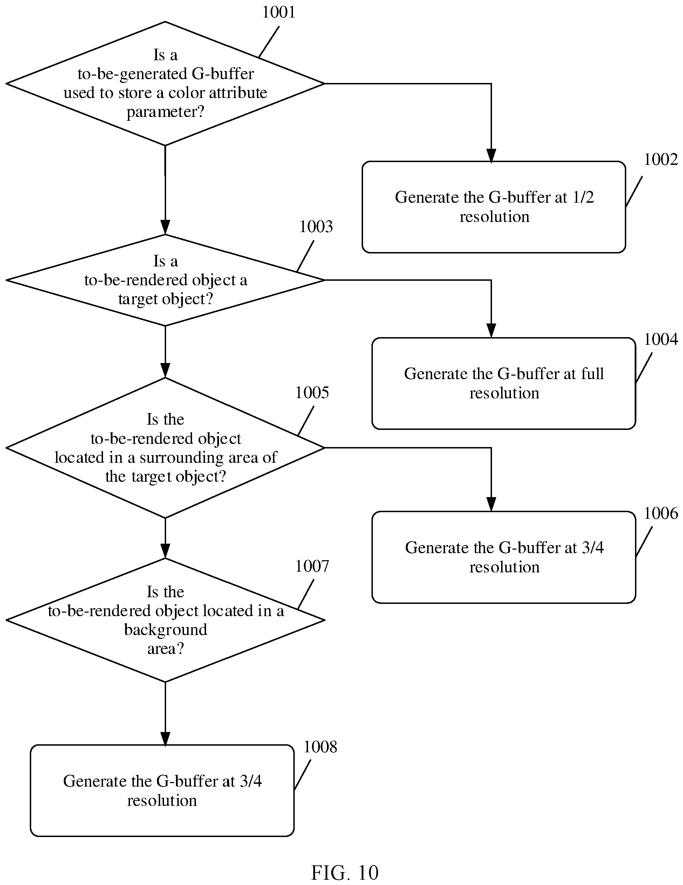

FIG. 10 is a schematic flowchart of generating a G-buffer based on adaptive resolution according to an embodiment of this application. As shown in FIG. 10, a process of generating the G-buffer based on the adaptive resolution includes the following steps.

Step 1001: Determine whether a to-be-generated G-buffer is used to store a color attribute parameter.

Because the electronic device needs to generate G-buffers that are separately used to store different attribute parameters, in a process in which the electronic device generates the G-buffer corresponding to the to-be-rendered object, the electronic device may first determine whether the currently to-be-generated G-buffer is used to store the color attribute parameter.

Step 1002: If the to-be-generated G-buffer is not used to store the color attribute parameter, generate the G-buffer at 1/2 resolution.

When the to-be-generated G-buffer is not used to store the color attribute parameter, for example, the to-be-generated G-buffer is used to store an attribute parameter such as a location attribute parameter or a normal vector attribute parameter, the electronic device may generate the G-buffer at low resolution. For example, the electronic device may generate the G-buffer at 1/2 of original resolution of a to-be-generated image (that is, the foregoing 1/2 resolution). For example, when the original resolution of the to-be-generated image is 1000 * 1000, the 1/2 resolution is 500 * 500.

Step 1003: If the to-be-generated G-buffer is used to store the color attribute parameter, determine whether the to-be-rendered object is a target object.

A manner in which the electronic device determines whether the to-be-rendered object is the target object may be determining whether the to-be-rendered object has a corresponding identifier. If the to-be-rendered object has the corresponding identifier, it may be determined that the to-be-rendered object is the target object. If the to-be-rendered object does not have the corresponding identifier, it may be determined that the to-be-rendered object is not the target object.

Step 1004: If the to-be-rendered object is the target object, generate the G-buffer at full resolution.

If the to-be-rendered object is the target object, a pixel obtained by rendering based on the target object is located in a region of interest in an image. Therefore, for the to-be-rendered object, rendering precision does not need to be reduced. The full resolution refers to the original resolution of the to-be-generated image. In other words, when generating the G-buffer of the to-be-rendered object, the electronic device generates the G-buffer at normal resolution, to ensure rendering precision of the target object.

Step 1005: If the to-be-rendered object is not the target object, determine whether the to-be-rendered object is located in a surrounding area of the target object.

Step 1006: If the to-be-rendered object is located in the surrounding area of the target object, generate the G-buffer at 3/4 resolution.

If the to-be-rendered object is located in the surrounding area of the target object, it may be considered that a pixel obtained by rendering based on the to-be-rendered object is located in a surrounding area of a region of interest. Therefore, for the to-be-rendered object, the electronic device may slightly reduce rendering precision, to reduce a calculation amount of the electronic device. For example, the electronic device may generate the G-buffer at 3/4 of the original resolution of the to-be-generated image (that is, the foregoing 3/4 resolution). For example, when the original resolution of the to-be-generated image is 1000 * 1000, the 1/2 resolution is 750 * 750.

Step 1007: If the to-be-rendered object is not located in the surrounding area of the target object, determine whether the to-be-rendered object is located in a background area.

Step 1008: If the to-be-rendered object is located in the background area, generate the G-buffer at 1/2 resolution.

If the to-be-rendered object is located in the background area, it may be considered that a pixel obtained by rendering based on the to-be-rendered object is located in a background area with a low attention degree. Therefore, for the to-be-rendered object, the electronic device may further reduce rendering precision, to reduce a calculation amount of the electronic device. For example, the electronic device may generate the G-buffer at 1/2 of the original resolution of the to-be-generated image, to further reduce the calculation amount of the electronic device.

The foregoing describes a process in which the electronic device performs rasterization processing on the to-be-rendered data. To further reduce a calculation amount in a rendering process, the following describes a process in which the electronic device obtains the to-be-rendered data provided in this embodiment.

In a possible embodiment, that the electronic device obtains the to-be-rendered data may include: The electronic device obtains 3D scene data and a fifth image sent by a server, where the fifth image is a rendered background image. In other words, the server may render a background area in a 3D scene, and deliver the rendered background image to the electronic device through a network. In this way, the electronic device may render only a non-background area part in the 3D scene, and fuse a rendered image with a background image delivered by the server, to obtain a complete and rendered image.

The background image sent by the server is an image that includes only a background area, that is, the background image includes only a distant background. For example, the server may render a background such as a sky, a mountain peak, a sea, or a distant high-rise building, to obtain a corresponding background image.

For example, in a possible scenario, a game application may run in the electronic device, and the server may render a background area in the 3D scene in real time, to obtain a background image and deliver the background image to the electronic device. In a process of running the game application, the electronic device renders a non-background area in the 3D scene, and obtains a rendered image with reference to the background image delivered by the server, to display the rendered image on a screen.

Optionally, when the game application running on the electronic device is an online game in which a large number of users are simultaneously online, the background image rendered by the server may be further separately delivered to a plurality of different electronic devices. Different electronic devices separately perform personalized rendering based on actual content that needs to be displayed, to display different images on screens.

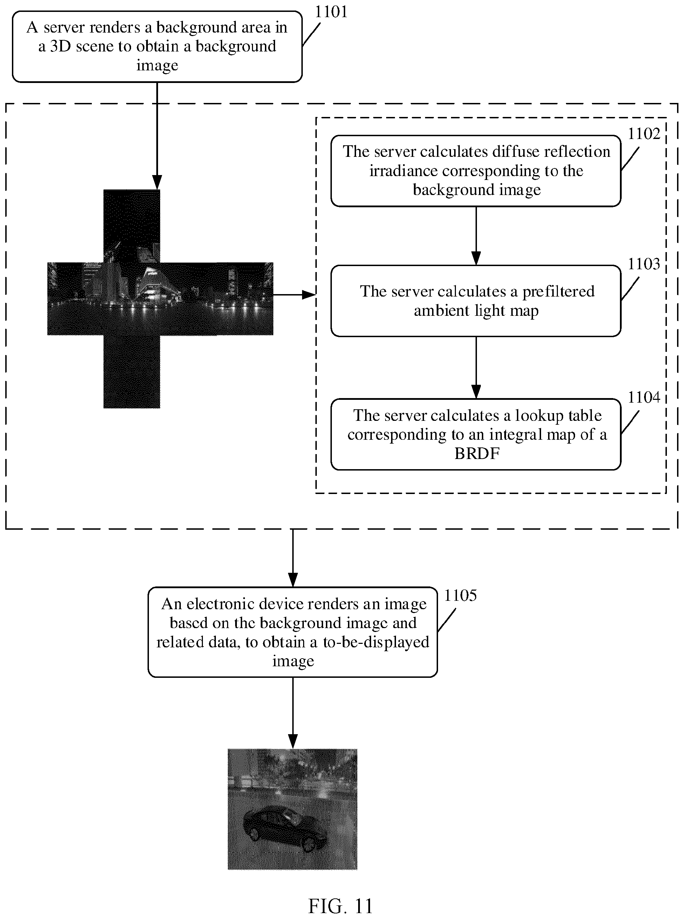

Specifically, refer to FIG. 11. FIG. 11 is a schematic flowchart of rendering and delivering the background image on the server according to an embodiment of this application. As shown in FIG. 11, a process of rendering and delivering the background image on the server includes the following steps.

Step 1101: The server renders a background area in a 3D scene, to obtain the background image.

In a possible example, the server renders the background area in the 3D scene, and may generate six maps. The six maps may be used to form one cube map, and the cube map may be used as the background image. In brief, the cube map is a texture that includes six 2D textures, and each 2D texture forms a face of a cube. In this way, a textured cube is formed. The cube map may include all background areas in the 3D scene, that is, it may be considered that an object of the 3D scene is wrapped in the cube map. Refer to FIG. 11. For example, the background image generated by the server includes six maps, and each map may form a face of a cube. In this way, the cube map is formed. The cube map includes background areas such as distant high-rise buildings, lights, and a night sky, and objects in the non-background area of the 3D scene are wrapped in the cube map.

Optionally, when a light source of the 3D scene changes or the background area of the 3D scene is updated, the server may re-render the changed 3D scene to obtain a new background image, to update the background image in real time.

Step 1102: The server calculates diffuse reflection irradiance corresponding to the background image.

In a rendering process, the electronic device may further need to perform ray tracing, to determine whether there is an intersection point between a ray and an object in the background area. Therefore, in addition to the background image corresponding to the background area, the electronic device may further need to obtain diffuse reflection irradiance corresponding to a background object in the background image, so that the electronic device can implement ray tracing processing.

Specifically, the irradiance corresponding to the background image may be calculated according to on a reflection equation. Because diffuse reflection $k_d$ and a mirror $k_s$ are independent of each other, the reflection equation may be integrated into two parts shown in Formula 1:

$$L_o(p, w_o) = \int_\Omega k_d \frac{c}{\pi} L_i(p, w_i) nw_i d_{w_i} + \int_\Omega k_s \frac{DFG}{4(\mathrm{w}_o n)(w_i n)} L_i(p, w_i) nw_i dw_i$$

Formula 1

Lo represents irradiance reflected by light projected onto a point p when viewed in a ωo direction. Li () represents emissivity at a point through an infinitely small solid angle ωi, and the solid angle can be considered as an incident direction vector ωi. Li (p, wi) represents incident light luminance at the point p. $w_i$ represents an incident ray vector of the solid angle. N indicates a normal. (wi * n) represents attenuation of incident light caused by an angle of incidence, and a multiplication symbol herein represents dot multiplication. ∫Ω.... dwi represents hemispherical integral of an incident light vector of a hemisphere in an incident direction. $k_s$ represents a specular scaling coefficient, $k_d$ represents a diffuse scaling coefficient, and $k_s + k_d$ is less than or equal to 1.

Step 1103: The server calculates a prefiltered ambient light map.

In this embodiment, because the electronic device performs ray tracing processing on the target object in a specific manner, a specular reflection part in the reflection equation is actually mainly concerned, that is, a second half part on the right of an equal sign in Formula 1. Formula 2 may be obtained by converting the second half part on the right of the equal sign in Formula 1.

$$L_o(p, w_o) = \int_W k_s \frac{DFG}{4(w_o n)(w_i n)} L_i(p, w_i) nw_i dw_i = \int_W f_r(p, w_i, w_o) L_i(p, w_i) nw_i dw_i$$

Formula 2

fr is referred to as a reflectivity equation, and a bidirectional reflectance distribution function (Bidirectional Reflectance Distribution Function, BRDF) is usually used. Because an integral term depends not only on input light $w_i$, but also depends on output light $w_o$, it is not possible to sample the cube map with two direction vectors. In this embodiment, pre-calculation is divided into two separate parts by using a division sum approximation method, and then the two parts are combined to calculate a pre-calculation result. Specifically, a manner in which the pre-calculation is divided into two separate parts for solution by using the division sum approximation method may be shown in Formula 3:

$$L_o(p, w_o)_s = \int_W L_i(p, w_i)dw_i * \int_W f_r(p, w_i, w_o)nw_idw_i \qquad \text{Formula 3}$$

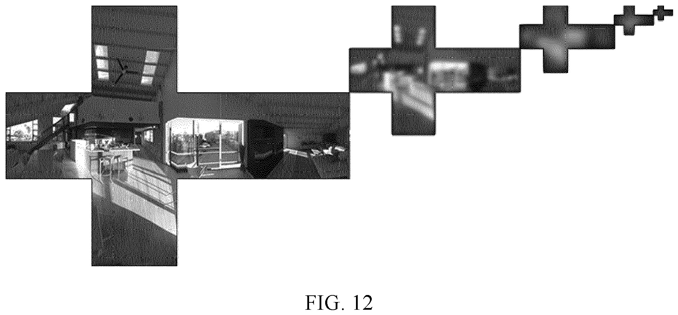

The pre-calculation result may be shown in FIG. 12. FIG. 12 is a schematic diagram of a pre-filtered ambient light map according to an embodiment of this application. A first part of convolution calculation is referred to as a pre-filtered environment map, and may be pre-calculated in advance. In this embodiment, the electronic device may obtain filter maps at different levels based on values of roughnesses.

Step 1104: The server calculates a lookup table (Lookup Table, LUT) corresponding to an integral map of a BRDF.

A second half part of the formula 3 is a BRDF part of a specular reflection integral, and may also be pre-calculated, to obtain a pre-calculation result, that is, an LUT corresponding to the integral map of the BRDF. Therefore, when the electronic device is in use, the electronic device can find the integral map of the BRDF corresponding to the LUT based on a roughness of a given surface and an angle n $w_i$ between incident light and a normal.

Step 1105: The server sends the background image and related data to the electronic device.

After rendering the background image and calculating the corresponding pre-calculation result, the server may send the background image and the corresponding pre-calculation result to the electronic device.

Step 1106: The electronic device renders an image based on the background image and the related data, to obtain a to-be-displayed image.

Finally, the electronic device may perform preliminary rendering based on the background image to obtain the foregoing first image, and perform ray tracing processing based on the related data and the first image to obtain the second image for display.

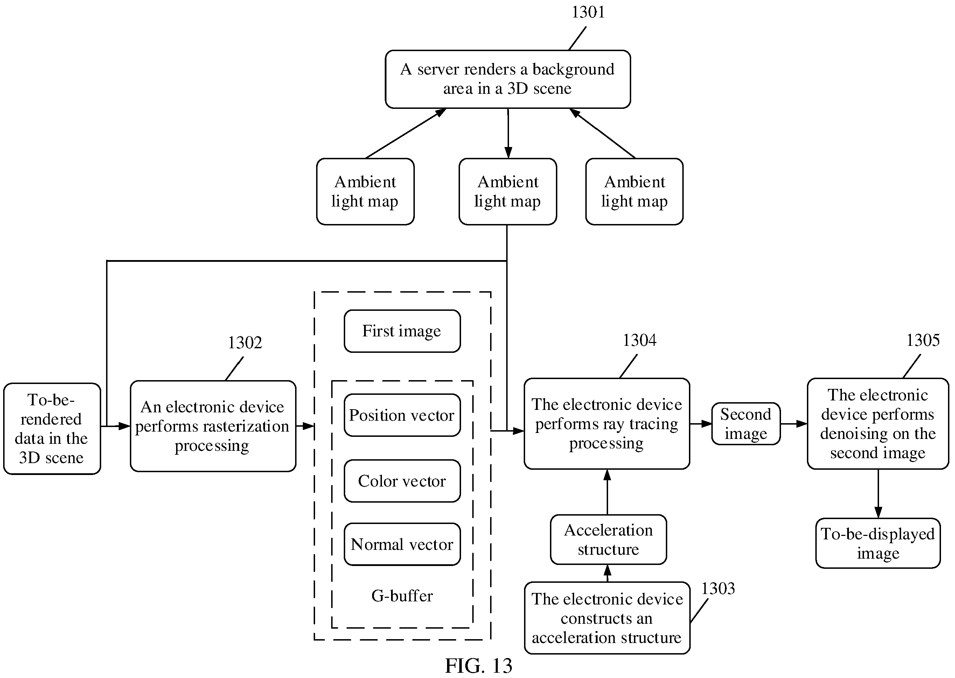

For ease of understanding, the following describes a device-cloud combination image rendering method provided in this embodiment of this application with reference to the accompanying drawings. FIG. 13 is a schematic flowchart of the device-cloud combination image rendering method according to an embodiment of this application. As shown in FIG. 13, the device-cloud combination image rendering method includes the following steps.

Step 1301: A cloud in a server renders a background area in a 3D scene, to obtain a rendered ambient light map.

In this embodiment, the cloud in the server may determine the background area in the 3D scene, and then render the background area in the 3D scene based on a light source such as a static light source and a dynamic light source, to obtain the ambient light map, where the ambient light map may be the cube map described above. Optionally, when the light source of the 3D scene changes or the background area of the 3D scene is updated, the server may re-render the changed 3D scene to obtain a new ambient light map, to update the ambient light map in real time.

Step 1302: The electronic device performs rasterization processing based on to-be-rendered data of the 3D scene and the ambient light map delivered by the server, to obtain a first image and a G-buffer storing an attribute parameter of a pixel in the first image.

After obtaining the ambient light map delivered by the server, the electronic device may perform rasterization processing based on local to-be-rendered data of the 3D scene and the received ambient light map, to obtain the first image and the G-buffer. The G-buffer stores the attribute parameter of the pixel in the first image, for example, an attribute parameter such as a position vector attribute parameter, a color vector attribute parameter, or a normal vector attribute parameter.

Step 1303: The electronic device constructs an acceleration structure.

To accelerate a process in which the electronic device performs ray tracing processing, the electronic device may construct the acceleration structure based on the 3D scene. For example, the acceleration structure may include a structure such as a BVH, a uniform grid, or a kd-tree.

Step 1303 may be performed before step 1302, or may be performed after step 1302. An execution sequence of step 1303 is not specifically limited in this embodiment.

Step 1304: The electronic device performs ray tracing processing based on the first image and the ambient light map, to obtain a second image.

After the electronic device constructs and obtains the acceleration structure, the electronic device may perform ray tracing processing based on the first image and the ambient light map by using the acceleration structure, to obtain an intersection point between a ray and the 3D scene. Then, the electronic device may update a color of a corresponding pixel in the first image based on a color of the intersection point, to obtain the second image.

Step 1305: The electronic device performs denoising on the second image to obtain a to-be-displayed image.

In a process of performing ray tracing processing, the electronic device usually limits a quantity of sampled rays corresponding to each pixel, to introduce noise to the second image. Therefore, the electronic device may perform denoising processing on the second image by using a denoising algorithm, to obtain a denoised image (that is, the to-be-displayed image), and display the denoised image on a screen. The denoising algorithm may include, for example, a time domain denoising algorithm.

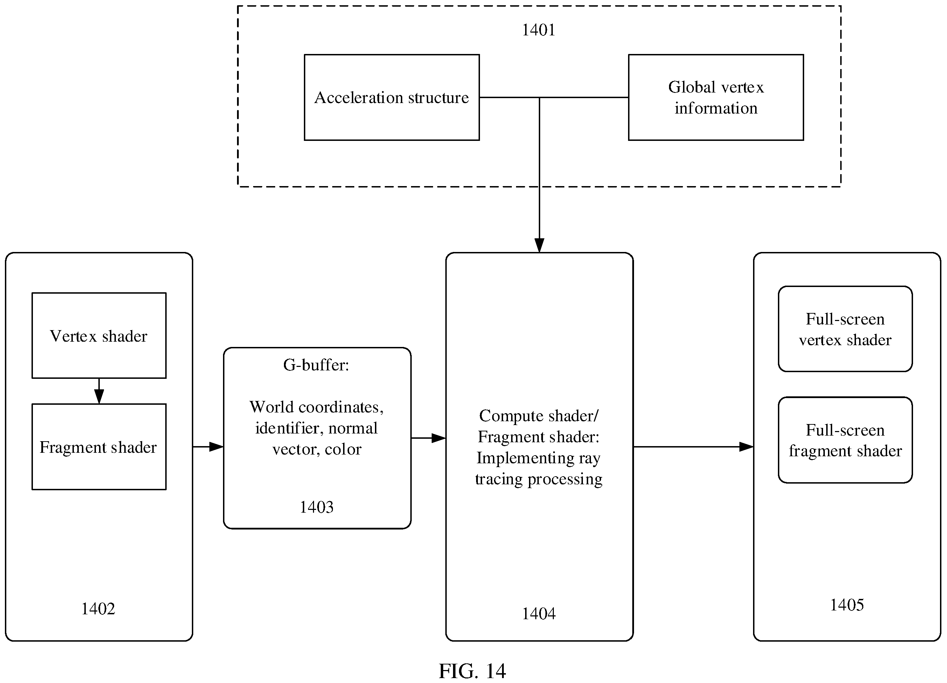

FIG. 14 is a schematic diagram of a hybrid rendering pipeline according to an embodiment of this application.

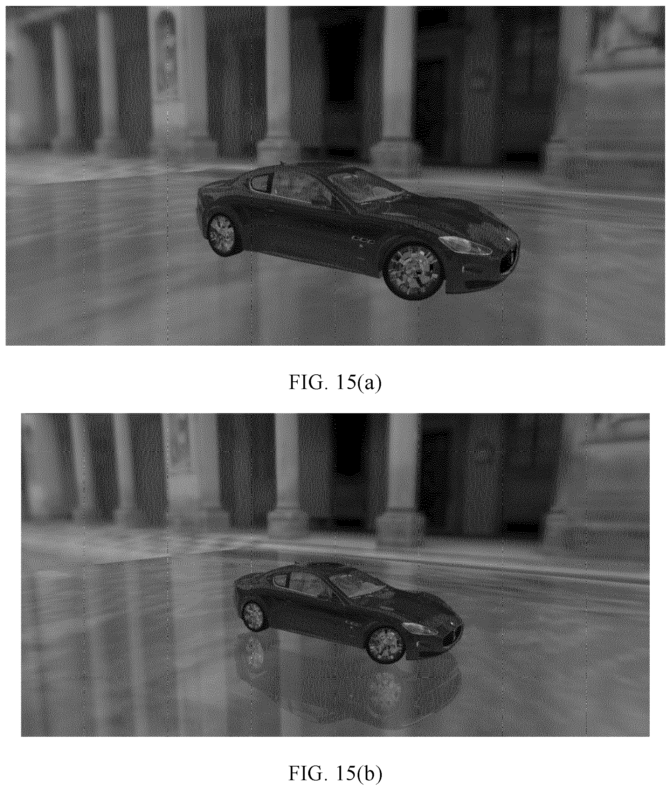

In a module 1401, a first rendering process, that is, rasterization processing, is performed by a vertex shader and a fragment shader. The vertex shader and the fragment shader perform preliminary rendering on the to-be-rendered data to obtain the first image. That is, the vertex shader and the fragment shader in the module 1401 perform the foregoing step 1302 to obtain the first image and the G-buffer storing the attribute parameter of the pixel in the first image. FIG. 15(a) is the first image obtained through rasterization processing according to an embodiment of this application. As shown in FIG. 15(a), in the first image obtained through rasterization processing is performed, there is no reflection of a vehicle on a floor, and reflection effect of the floor is not rendered on the first image.

In a module 1402, the electronic device generates and stores a G-buffer corresponding to the first image. The G-buffer may store information such as an identifier, world coordinates, a normal vector, and a color that are corresponding to the pixel in the first image. The world coordinates corresponding to the pixel in the first image may be saved as a screen space map, or may be obtained through reverse deduction by using a depth map provided in the rendering pipeline and an inverse matrix of a view projection (view project) matrix.

In a module 1403, a CPU or a GPU of the electronic device constructs the acceleration structure, and obtains global vertex information for coloring in ray tracing processing.

In a module 1404, a second rendering process, that is, ray tracing processing, is performed by a compute shader or a fragment shader. The compute shader or the fragment shader is used to implement ray tracing effect such as reflection, refraction, or shadow of a local object. FIG. 15(b) is the second image obtained through ray tracing processing according to an embodiment of this application. As shown in FIG. 15(a), in the second image obtained through ray tracing processing, reflection of the vehicle exists on the floor, and reflection effect of the floor is rendered on the second image.

Optionally, when the electronic device implements ray tracing processing based on the compute shader, in the module 1405, a full-screen vertex shader and a full-screen fragment shader further process a rendered image, to obtain an image for display on a screen.

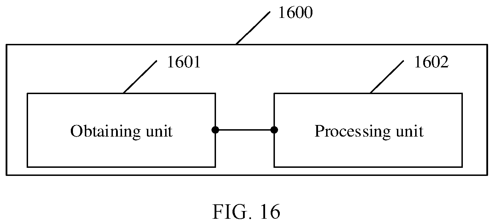

Based on the embodiments corresponding to FIG. 2 to FIG. 15(b), to better implement the foregoing solutions in embodiments of this application, the following further provides a related device configured to implement the foregoing solutions. For details, refer to FIG. 16. FIG. 16 is a schematic diagram of a structure of an electronic device 1600 according to an embodiment of this application. The electronic device 1600 includes an obtaining unit 1601 and a processing unit 1602. The obtaining unit 1601 is configured to obtain to-be-rendered data. The processing unit 1602 is configured to perform rasterization processing on the to-be-rendered data to obtain a first image. The processing unit 1602 is further configured to perform ray tracing processing on a target object in the first image, to obtain a second image, where the target object has an identifier, and the identifier identifies an object on which ray tracing processing is to be performed.

In a possible implementation, the identifier further identifies a ray tracing processing manner.

In a possible implementation, the ray tracing processing manner includes reflection, refraction, shadow, or caustic.

In a possible implementation, the processing unit 1602 is further configured to: perform ray tracing on the target object in the first image based on the identifier of the target object, to obtain a ray tracing result; and update a color of the target object in the first image based on the ray tracing result, to obtain the second image.

In a possible implementation, the processing unit 1602 is further configured to determine a target pixel in the first image, where the target pixel has the identifier, and the target object includes one or more target pixels. The obtaining unit 1601 is further configured to obtain a target location of the target pixel in a three-dimensional scene. The processing unit 1602 is further configured to perform ray tracing based on the target location and the identifier, to obtain an intersection point between a ray and the three-dimensional scene. The processing unit 1602 is further configured to update a color of the target pixel based on a color of the intersection point.

In a possible implementation, the processing unit 1602 is further configured to: calculate a projection of the intersection point on an image based on a location of the intersection point in the three-dimensional scene; if the intersection point has a corresponding projection pixel on the first image or a third image, update the color of the target pixel based on a color of the projection pixel; and if the intersection point does not have the corresponding projection pixel on the first image or the third image, calculate the color of the intersection point, and update the color of the target pixel based on the color of the intersection point, where the third image is a previous frame of image of the second image.

In a possible implementation, the obtaining unit 1601 is further configured to obtain an acceleration structure, where the acceleration structure is obtained based on the three-dimensional scene. The processing unit 1602 is further configured to perform ray tracing based on the target location and the identifier by using the acceleration structure, to obtain the intersection point between the ray and the three-dimensional scene.

In a possible implementation, the processing unit 1602 is further configured to: perform illumination-free rendering on the to-be-rendered data to obtain a fourth image; obtain, based on attribute information of the to-be-rendered data, a geometry buffer corresponding to a pixel in the fourth image, where the geometry buffer is used to store an attribute parameter corresponding to the pixel; and perform illumination calculation on the pixel in the fourth image based on the geometry buffer, to obtain the first image.

In a possible implementation, the processing unit 1602 is further configured to: if a to-be-rendered object in the fourth image is the target object, generate, based on attribute information of the to-be-rendered object and first resolution, a first geometry buffer corresponding to the to-be-rendered object; if the to-be-rendered object in the fourth image is located in a surrounding area of the target object, generate, based on the attribute information of the to-be-rendered object and second resolution, a second geometry buffer corresponding to the to-be-rendered object; and if the to-be-rendered object in the fourth image is located in a background area, generate, based on the attribute information of the to-be-rendered object and third resolution, a third geometry buffer corresponding to the to-be-rendered object. The to-be-rendered data includes the to-be-rendered object, the first resolution is greater than the second resolution, the second resolution is greater than the third resolution, and the first geometry buffer, the second geometry buffer, and the third geometry buffer are used to store a color attribute parameter.

In a possible implementation, the processing unit 1602 is further configured to generate, based on the attribute information of the to-be-rendered object and fourth resolution, a fourth geometry buffer corresponding to the to-be-rendered object, where an attribute parameter stored by the fourth geometry buffer is not the color attribute parameter, and the fourth resolution is less than the first resolution.

In a possible implementation, the obtaining unit 1601 is further configured to obtain three-dimensional scene data and a fifth image sent by a server, where the fifth image is a rendered background image.

In a possible implementation, the to-be-rendered data includes the target object and a material parameter of the target object; and the processing unit 1602 is further configured to determine the identifier of the target object based on the material parameter of the target object.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in the form of a software product. The computer software product is stored in a storage medium and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory, a random access memory, a magnetic disk, or an optical disc.

**Claims**

1.  An image processing method, comprising:

    obtaining to-be-rendered data;
    performing rasterization processing on the to-be-rendered data to obtain a first image; and
    performing ray tracing processing on a target object in the first image to obtain a second image, wherein
    the target object has an identifier, and the identifier identifies an object on which ray tracing processing is to be
    performed.

2.  The image processing method according to claim 1, wherein the identifier further identifies a ray tracing processing
    manner.

3.  The image processing method according to claim 2, wherein the ray tracing processing manner comprises reflection,
    refraction, shadow, or caustic.

4.  The image processing method according to any one of claims 1 to 3, wherein the performing ray tracing processing
    on a target object in the first image comprises:

    obtaining a location of the target object in the first image in a three-dimensional scene;
    performing ray tracing processing based on the location of the target object in the three-dimensional scene, to
    obtain a ray tracing result; and
    updating a color of the target object in the first image based on the ray tracing result, to obtain the second image.

5.  The image processing method according to claim 2 or 3, wherein the performing ray tracing processing on a target
    object in the first image to obtain a second image comprises:

    performing ray tracing on the target object in the first image based on the identifier of the target object, to obtain
    a ray tracing result; and
    updating a color of the target object in the first image based on the ray tracing result, to obtain the second image.

6.  The image processing method according to claim 5, wherein the performing ray tracing on the target object in the
    first image based on the identifier of the target object, to obtain a ray tracing result comprises:

    determining a target pixel in the first image, wherein the target pixel has the identifier, and the target object
    comprises one or more target pixels;
    obtaining a target location of the target pixel in a three-dimensional scene; and
    performing ray tracing based on the target location and the identifier, to obtain an intersection point between a
    ray and the three-dimensional scene; and
    the updating a color of the target object in the first image based on the ray tracing result comprises:
    updating a color of the target pixel based on a color of the intersection point.

7.  The image processing method according to claim 6, wherein the updating a color of the target pixel based on a color
    of the intersection point comprises:

    calculating a projection of the intersection point on an image based on a location of the intersection point in the
    three-dimensional scene;
    if the intersection point has a corresponding projection pixel on the first image or a third image, updating the
    color of the target pixel based on a color of the projection pixel; and
    if the intersection point does not have the corresponding projection pixel on the first image or the third image,
    calculating the color of the intersection point, and updating the color of the target pixel based on the color of
    the intersection point, wherein
    the third image is a previous frame of image of the second image.

8.  The image processing method according to claim 6 or 7, wherein the performing ray tracing based on the target
    location and the identifier, to obtain an intersection point between a ray and the three-dimensional scene comprises:

    obtaining an acceleration structure, wherein the acceleration structure is obtained based on the three-dimensional scene; and

performing ray tracing based on the target location and the identifier by using the acceleration structure, to obtain the intersection point between the ray and the three-dimensional scene.

9. The image processing method according to any one of claims 1 to 8, wherein the performing rasterization processing on the to-be-rendered data to obtain a first image comprises:

performing illumination-free rendering on the to-be-rendered data to obtain a fourth image;
obtaining, based on attribute information of the to-be-rendered data, a geometry buffer corresponding to a pixel in the fourth image, wherein the geometry buffer is used to store an attribute parameter corresponding to the pixel; and
performing illumination calculation on the pixel in the fourth image based on the geometry buffer, to obtain the first image.

10. The image processing method according to claim 9, wherein the obtaining, based on attribute information of the to-be-rendered data, a geometry buffer corresponding to a pixel in the fourth image comprises:

if a to-be-rendered object in the fourth image is the target object, generating, based on attribute information of the to-be-rendered object and first resolution, a first geometry buffer corresponding to the to-be-rendered object;
if the to-be-rendered object in the fourth image is located in a surrounding area of the target object, generating, based on the attribute information of the to-be-rendered object and second resolution, a second geometry buffer corresponding to the to-be-rendered object; and
if the to-be-rendered object in the fourth image is located in a background area, generating, based on the attribute information of the to-be-rendered object and third resolution, a third geometry buffer corresponding to the to-be-rendered object, wherein
the to-be-rendered data comprises the to-be-rendered object, the first resolution is greater than the second resolution, the second resolution is greater than the third resolution, and the first geometry buffer, the second geometry buffer, and the third geometry buffer are used to store a color attribute parameter.

11. The image processing method according to claim 10, wherein the obtaining, based on attribute information of the to-be-rendered data, a geometry buffer corresponding to a pixel in the fourth image further comprises:

generating, based on the attribute information of the to-be-rendered object and fourth resolution, a fourth geometry buffer corresponding to the to-be-rendered object, wherein an attribute parameter stored by the fourth geometry buffer is not the color attribute parameter, and
the fourth resolution is less than the first resolution.

12. The image processing method according to any one of claims 1 to 11, wherein the obtaining to-be-rendered data comprises:

obtaining three-dimensional scene data and a fifth image sent by a server, wherein the fifth image is a rendered background image.

13. The image processing method according to any one of claims 1 to 12, wherein the to-be-rendered data comprises the target object and a material parameter of the target object; and
the method further comprises:
determining the identifier of the target object based on the material parameter of the target object.

14. An electronic device, comprising a memory and a processor, wherein the memory stores code, the processor is configured to execute the code, and when the code is executed, the electronic device performs the method according to any one of claims 1 to 13.

15. A computer-readable storage medium, comprising computer-readable instructions, wherein when the computer-readable instructions are run on a computer, the computer is enabled to perform the method according to any one of claims 1 to 13.

16. A computer program product, comprising computer-readable instructions, wherein when the computer-readable instructions are run on a computer, the computer is enabled to perform the method according to any one of claims 1 to 13.

FIG. 1a

FIG. 1b

Electronic device 2000

Central processing unit 2001

Application 2006

Operating system 2005

Graphics library user-mode driver

System graphics library interface

Graphics library kernel-mode driver

Layer composition display module

Memory 2004

Instruction stream

Rendering data

Display device 2003

Graphics processing unit 2002

Rendering pipeline

Cache

FIG. 2

300

Obtain to-be-rendered data                                              301

Perform rasterization processing on the to-be-rendered data to obtain a first image          302

Perform ray tracing processing on a target object in the first image to obtain a
second image          303

FIG. 3

Determine a target pixel in a first image — 3031

Obtain a target location of the target pixel in a three-dimensional scene — 3032

Perform ray tracing based on the target location and an identifier, to obtain an intersection point between a ray and the three-dimensional scene — 3033

Perform ray tracing based on the target location and an identifier, to obtain an intersection point between a ray and the three-dimensional scene — 3034

FIG. 4

FIG. 5

FIG. 6

FIG. 7

```
┌ ─ ─ ─ ─ ─ ─ ─ ─ ┐
│  ┌───────────┐  │
│  │  Position  │  │
│  │ vector in a │  │
│  │  G-buffer  │  │
│  └───────────┘  │
│                 │                    ┌──────────────────────────────────┐  801
│  ┌───────────┐  │                    │                                  │ ╱
│  │  Normal    │  │──────────────────▶│   Calculate a reflected/refracted ray │
│  │ vector in a │  │                    │                                  │
│  │  G-buffer  │  │                    └──────────────────────────────────┘
│  └───────────┘  │
│                 │
│  ┌───────────┐  │
│  │ Identifier in │  │
│  │ a G-buffer  │  │
│  └───────────┘  │
└ ─ ─ ─ ─ ─ ─ ─ ─ ┘
```

Calculate a reflected/refracted ray — 801

Calculate an intersection point between the ray and a scene based on an acceleration structure — 802

803

Is there the intersection point?

No → Display a color of a current pixel point — 804 ← Color vector in a G-buffer of a current image frame

Yes

TO FIG. 8B

TO FIG. 8B

FIG. 8A

CONT.
FROM
FIG. 8A

CONT.
FROM
FIG. 8A

Projection calculation — 805

Is there a projection pixel point in a current image frame? — 806

Yes → Use a color of the projection pixel point as a color of reflection/refraction — 807

No →

Is there the projection pixel point in a previous image frame? — 808

Yes → Use a color of the projection pixel point as a color of reflection/refraction — 809

Color vector in a G-buffer of a current image frame

No →

Recalculate a color of the intersection point as a color of reflection/refraction — 810

FIG. 8B

Perform illumination-free rendering on to-be-rendered data to obtain a fourth image — 3021

Obtain, based on attribute information of the to-be-rendered data, a geometric buffer corresponding to a pixel in the fourth image, where the geometric buffer is used to store an attribute parameter corresponding to the pixel — 3022

Perform illumination calculation on the pixel in the fourth image based on the G-buffer, to obtain the first image — 3023

FIG. 9

**1001**
Is a
to-be-generated G-buffer
used to store a color attribute
parameter?

**1002**
Generate the G-buffer at 1/2
resolution

**1003**
Is a
to-be-rendered object a
target object?

**1004**
Generate the G-buffer at full
resolution

**1005**
Is the
to-be-rendered object
located in a surrounding area of
the target object?

**1006**
Generate the G-buffer at 3/4
resolution

**1007**
Is the
to-be-rendered object located in a
background
area?

**1008**
Generate the G-buffer at 3/4
resolution

FIG. 10

A server renders a background area in a 3D scene to obtain a background image `1101`

The server calculates diffuse reflection irradiance corresponding to the background image `1102`

The server calculates a prefiltered ambient light map `1103`

The server calculates a lookup table corresponding to an integral map of a BRDF `1104`

An electronic device renders an image based on the background image and related data, to obtain a to-be-displayed image `1105`

FIG. 11

FIG. 12

EP 4 242 973 A1

1301

```
A server renders a background
      area in a 3D scene
```

Ambient
light map

Ambient
light map

Ambient
light map

1302

To-be-
rendered
data in the
3D scene

An electronic device
performs rasterization
processing

First image

Position vector

Color vector

Normal vector

G-buffer

1304

The electronic device
performs ray tracing
processing

Second
image

1305

The electronic
device performs
denoising on the
second image

Acceleration
structure

The electronic device
constructs an
acceleration structure

1303

To-be-displayed
image

FIG. 13

35

FIG. 14

FIG. 15(a)

FIG. 15(b)

1600

1601

1602

Obtaining unit

Processing unit

FIG. 16

## INTERNATIONAL SEARCH REPORT

| International application No. |
|---|
| **PCT/CN2021/133414** |

| A. | CLASSIFICATION OF SUBJECT MATTER |
|---|---|

G06T 15/06(2011.01)i

According to International Patent Classification (IPC) or to both national classification and IPC

| B. | FIELDS SEARCHED |
|---|---|

Minimum documentation searched (classification system followed by classification symbols)

G06T

Documentation searched other than minimum documentation to the extent that such documents are included in the fields searched

Electronic data base consulted during the international search (name of data base and, where practicable, search terms used)

CNPAT; CNKI; WPI; EPODOC: 光线追踪, 光追, 对象, 物体, 标记, 标识, 手段, 方式, 渲染, ray trace, identi+, id, target, mark +, object, process+, render+

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 107256574 A (BAVLO JEWELRY DESIGN (BEIJING) CO., LTD.) 17 October 2017 (2017-10-17) <br> description, paragraphs [0020]-[0033] | 1-16 |
| A | CN 108369747 A (INTEL CORPORATION) 03 August 2018 (2018-08-03) <br> entire document | 1-16 |
| A | CN 102855655 A (JILIN YIXO ANIME & GAME TECHNOLOGY CO., LTD.) 02 January 2013 (2013-01-02) <br> entire document | 1-16 |
| A | US 2016093091 A1 (CANON KABUSHIKI KAISHA) 31 March 2016 (2016-03-31) <br> entire document | 1-16 |
| A | US 2010289799 A1 (HANIKA, Johannes et al.) 18 November 2010 (2010-11-18) <br> entire document | 1-16 |

☐ Further documents are listed in the continuation of Box C.　　☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **11 February 2022** | **01 March 2022** |

| Name and mailing address of the ISA/CN | Authorized officer |
|---|---|
| **China National Intellectual Property Administration (ISA/ CN)** <br> **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT
### Information on patent family members

International application No.

**PCT/CN2021/133414**

| Patent document cited in search report | | | Publication date (day/month/year) | Patent family member(s) | | | Publication date (day/month/year) |
|---|---|---|---|---|---|---|---|
| CN | 107256574 | A | 17 October 2017 | None | | | |
| CN | 108369747 | A | 03 August 2018 | US | 2017178398 | A1 | 22 June 2017 |
| | | | | WO | 2017105738 | A1 | 22 June 2017 |
| CN | 102855655 | A | 02 January 2013 | None | | | |
| US | 2016093091 | A1 | 31 March 2016 | JP | 2016071733 | A | 09 May 2016 |
| US | 2010289799 | A1 | 18 November 2010 | None | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202011379098